# EUROPÄISCHE PATENTSCHRIFT

(11) **EP 0 963 690 B1**
(45) Veröffentlichungstag und Bekanntmachung des Hinweises auf die Patenterteilung: **01.09.2004**
(21) Anmeldenummer: 99111255.8
(22) Anmeldetag: 09.06.1999
(51) Int. Cl.: A01C 17/00

(54) **Schleuderstreuer**
Centrifugal spreader
Epandeur centrifuge

(30) Priorität: 10.06.1998 DE 19825917; 25.02.1999 DE 19908141
(43) Veröffentlichungstag der Anmeldung: 15.12.1999
(73) Patentinhaber: RAUCH LANDMASCHINENFABRIK GMBH, D-76547 Sinzheim (DE)
(72) Erfinder: Rauch, Norbert, 76547 Sinzheim (DE)
(74) Vertreter: Lichti, Heiner, Dipl.-Ing.

(56) Entgegenhaltungen:
- EP-A- 0 590 737
- EP-A- 0 674 831
- DE-A- 3 310 424
- DE-A- 3 641 080
- DE-A- 3 714 642
- DE-A- 4 417 549

## Beschreibung

Die Erfindung betrifft einen Schleuderstreuer zum Verteilen von Streugut, mit einem Vorratsbehälter, wenigstens einer rotatorisch angetriebenen Verteilerscheibe mit Wurfschaufeln, wenigstens einem Mittel zum Einstellen des Streuers auf verschiedene Arbeitsbreiten und/oder Streugutsorten und/oder Verteilarten und einem einstellbaren Dosierorgan für jede Verteilerscheibe, das von einem rechnergestützten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom und wenigstens einer im Rechner hinterlegten Kennlinie für den Massenstrom regelbar ist.

Bei der Verteilung von Streugut, z.B. im Winterstraßendienst oder in der Landtechnik, kommt es maßgeblich auf eine exakte Verteilung des Streugutes an. Dies gilt in ganz besonderem Maß bei der Verteilung körniger Düngemittel. In Abhängigkeit von der Qualität des Bodens, der Pflanzenart, der Jahreszeit und den Witterungsverhältnisse muß die jeweils notwendige Streumenge pro Fläche trotz einer Vielzahl von Einflußfaktoren konstant bleiben. Diese Einflußfaktoren sind insbesondere die Fahrgeschwindigkeit des Traktors, die variable Arbeitsbreite, die Düngersorte nach ihrem Riesel-, Gleit- und Flugverhalten, deren Änderung durch Witterungseinflüsse, insbesondere Feuchtigkeit, sowie die Verteilart, z. B. Normalstreuen, Spätdüngen und Grenzstreuen. All dies setzt eine genaue Dosierung des aus dem Vorratsbehälter auslaufenden Massenstroms voraus und erfordert am Streuer für die Düngerverteilung Einstellmittel, um die entsprechenden Betriebsparameter einstellen zu können. Als solche Einstellmittel kommen verstellbare Wurfschaufeln oder komplett austauschbare Verteilerscheiben in Frage. Ferner kann eine Einstellung des Aufgabepunktes des Streugutes auf der Verteilerscheibe oder auch eine Drehzahländerung des Antriebs vorgesehen sein.

Eine genaue Dosierung des Massenstroms erfordert bis heute eine Eichung des Dosiersystems durch eine sogenannte Abdrehprobe, die in der Regel im Stillstand durchgeführt wird. Dabei wird für einen bestimmten Betriebspunkt, nämlich eine definierte Arbeitsbreite, eine vorgegebene Fahrgeschwindigkeit und Sollstreumenge, die Einstellung des Dosiersystems solange geändert, bis der gewünschte Massenstrom gemessen wird, der sich aus dem Produkt der Arbeitsbreite, Sollstreumenge und Fahrgeschwindigkeit ergibt.

Für eine fahrgeschwindigkeitsabhängige Regelung des Massenstroms werden rechnergestützte Regelgeräte eingesetzt, die mit gespeicherten Kennlinien arbeiten, wobei die Kennlinie das Verhältnis der Einstellung des Dosiersystems zum Massenstrom wiedergibt. Mittels Abdrehproben werden dabei gute Dosiergenauigkeiten erreicht (EP 0 472 855). Verändert jedoch das Streugut während des Betriebs seine physikalischen Eigenschaften bzw. entsprechen diese Eigenschaften nicht denen bei der Abdrehprobe, müssen während des Streubetriebs die Eichvorgänge wiederholt werden, andernfalls sich die Dosiergenauigkeit verschlechtert.

Es ist ferner bekannt, die Regelung dadurch zu optimieren, daß in die Verteilmaschine ein Wiegesystem integriert ist. Durch Wiegen während des Streubetriebs wird die über das Regelgerät eingestellte Streugutmenge mit der aus den Wägungen ermittelten Streugutmenge verglichen und die Kennlinie Massenstrom/Einstellung Dosiersystem korrigiert. Bei diesem System muß zu Beginn eine Überoder Unterdosierung hingenommen werden, doch läßt sich durch Optimierung eine umständliche Abdrehprobe vermeiden. Nachteilig bleibt, daß während des Streubetriebs die Wägung und Eichung im Stillstand auf einer ebenen Fläche vorgenommen werden muß. Starke Änderungen der Fahrgeschwindigkeit oder auch der Sollstreumenge erfordern mehrere Wägungen zur richtigen Einstellung des Dosiersystems. Schließlich ist der technische Aufwand für das Wiegesystem erheblich.

Der Erfindung liegt die Aufgabe zugrunde, einen Schleuderstreuer zum Verteilen von Streugut, vorzuschlagen, bei dem eine exakte Dosierung des Streugutes möglich ist, ohne daß Eichvorgänge im Stillstand durchzuführen sind.

Ausgehend von dem Schleuderstreuer nach dem Oberbegriff des Anspruchs 1 wird diese Aufgabe dadurch gelöst, daß
- ein Sensor für die Aufnahme des Drehmoments des Rotationsantriebs der Verteilerscheibe vorgesehen ist,
- im Rechner je eine Massenstrom-Drehmoment/Kennlinie (ṁ/M) für die Funktion zwischen Massenstrom (ṁ) einerseits und Drehmoment (M) andererseits für jedes Einstellmittel und/oder für jede Einstellung der Einstellmittel hinterlegt ist und
- das Dosierorgan mittels der als Stellgröße dienenden Ausgangsgröße des Drehmoment-Sensors nach Abgleich mit der Eingangsgröße für den Sollmassenstrom regelbar ist.

Die Erfindung geht von einem bekannten Vorschlag (DE 44 17 549 A1) aus, der auf der Erkenntnis beruht, daß bei einem Straßenstreuer mit einer hydraulisch angetriebenen Verteilerscheibe für Streusalz der aus dem Vorratsbehälter auf die Verteilerscheibe auslaufende Massenstrom direkt proportional dem Drehmoment bzw. der Änderung des Drehmoments gegenüber dem Leerlaufdrehmoment und umgekehrt proportional der Drehzahl und dem Quadrat des Scheibenradius' ist. Diese Beziehung gilt unabhängig von der Art des Streugutes, also dessen Rieselfähigkeit beim Auslaufen aus dem Behälter und unabhängig von dessen Gleitfähigkeit auf der Scheibe. Das Drehmoment des hydraulischen Antriebs ist wiederum proportional dem Druckabfall am Hydraulikmotor, so daß das Drehmoment über eine Druckmessung erfaßt werden kann. Ebenso wird die Drehzahl über einen Sensor gemessen, so daß sich aus den Ausgangsgrößen Druck und Drehzahl das aktuelle Drehmoment ermitteln läßt, das wiederum den Istmassenstrom repräsentiert. Durch Abgleich mit den entsprechenden Größen für den Sollmassenstrom wird das Dosierorgan nachgeregelt.

Dieses bekannte Verfahren nimmt jedoch keine Rücksicht auf unterschiedliche Streugutsorten und auch nicht auf die Besonderheiten bei Düngerstreuern, die zur Berücksichtigung der verschiedenen Einflußfaktoren Einstellmittel, gegebenenfalls sogar mehrere unterschiedliche Einstellmittel für die Düngerverteilung benötigen, wohingegen drehzahlvariable Antriebe bei Düngerstreuern noch nicht allgemein gebräuchlich sind. Für jedes Einstellmittel bzw. dessen Einstellung ist erfindungsgemäß im rechnergestützten Regelgerät eine Kennlinie für die Beziehung zwischen Massenstrom einerseits und Drehmoment andererseits hinterlegt. Vor Aufnahme der Streuarbeit wird die für das konkrete Einstellmittel bzw. die konkrete Einstellung hinterlegte Kennlinie ausgewählt. Während der Streuarbeit wird mittels der Ausgangsgröße des Drehmomentsensors der Istmassenstrom festgestellt und bei Abweichung vom Sollmassenstrom das Dosierorgan mittels der vom Drehmomentsensor gelieferten Stellgröße entsprechend nachgeführt. Kennlinie im Sinne der Erfindung kann eine durch eine mathematische Funktion bestimmte Kurve, eine aus Zahlenwerten bestehende Tabelle oder auch eine mathematische Formel sein.

Die vorstehend wiedergegebenen Merkmale der Erfindung haben Geltung für alle Arten von Rotationsantrieben für Verteilerscheiben an Schleuderstreuern, nämlich mechanische, hydraulische oder elektrische, soweit sie mit konstanter Drehzahl betrieben werden und im übrigen drehzahlstabil arbeiten.

Das vom Drehmoment-Sensor aufgenommene Drehmoment setzt sich zusammen aus dem Leerlaufdrehmoment der Verteilerscheibe und dem aus dem Massenstrom resultierenden Drehmoment. Dieses Gesamt-Drehmoment hängt unter anderem von den konstruktiven Gegebenheiten der Verteilerscheibe (Durchmesser, Anzahl der Wurfflügel, Stellung der Wurfflügel etc.) ab. Es werden deshalb in einer bevorzugten Ausführung der Erfindung für jedes Einstellmittel und/oder jede Einstellung der Einstellmittel ein mittels des Drehmoment-Sensors bei bestimmten Massenströmen gemessenes Gesamtdrehmoment und bei einem Massenstrom ṁ = 0 gemessenes Leerlaufdrehmoment M₀ werksseitig aufgenommen und als Werte im Rechner hinterlegt. Im späteren Streubetrieb ergibt sich dann der Massenstrom mittels der aufgenommenen Massenstrom/Drehmoment-Kennlinie aus dem Gesamt-Drehmoment abzüglich des Leerlaufdrehmoments.

Die vorstehend beschriebene Lehre der Erfindung gilt für alle drehzahlstabilen Antriebe. Diese Voraussetzung ist bei Schleuderstreuern in der Landtechnik beispielsweise nur bei einem von der Zapfwelle des Traktors angetriebenen mechanischen Getriebe garantiert, sofern die Drehzahl der Zapfwelle konstant ist. Diese Idealbedingung liegt jedoch in der Regel nicht vor, d.h. der Rotationsantrieb ist nicht drehzahlstabil.

Erfindungsgemäß ist deshalb bei einem drehzahlinstabilen Rotationsantrieb für die Verteilerscheibe zusätzlich
- ein Sensor für die Aufnahme der Drehzahl (n) des Rotationsantriebs vorgesehen,
- im Rechner für jede Drehzahl eine Massenstrom/Drehmoment-Kennlinie (ṁ/M) für die Funktion zwischen Massenstrom (ṁ) und Drehmoment (M) bei dieser Drehzahl (n) hinterlegt und
- das Dosierorgan mittels der Ausgangsgröße des Drehmoment-Sensors und der entsprechend der Drehzahl selektierten Massenstrom/Drehmoment-Kennlinie nach Abgleich mit der Eingangsgröße für den Sollmassenstrom regelbar.

Auch in diesem Fall wird werkseitig die Massenstrom/Drehmoment-Kennlinie aufgenommen, und zwar für jeweils für die im Betrieb auftretenden Drehzahlen.

Während der Streuarbeit wird der Ist-Massenstrom bei der gemessenen Drehzahl über den Drehmoment-Sensor und den Drehzahl-Sensor ermittelt. Abweichungen des Istmassenstroms vom Sollmassenstrom werden durch Änderung der Einstellung des Dosierorgans nachgeführt.

Die Erfindung betrifft ferner einen Schleuderstreuer zum Verteilen von Streugut mit einem Vorratsbehälter, wenigstens einer Verteilerscheibe mit Wurfschaufeln und einem drehzahlveränderlichen Antrieb zum Einstellen des Streuers auf verschiedene Verteilaufgaben und einem einstellbaren Dosierorgan für jede Verteilerscheibe, das von einem rechnergeschützten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom und wenigstens einer im Rechner hinterlegten Kennlinie für den Massenstrom regelbar ist. Beim Einsatz eines solchen Streuers in der Landtechnik dient der drehzahlveränderliche Antrieb vornehmlich zur Einstellung der Arbeitsbreite, kann aber auch zur Einstellung auf die Düngersorte und beispielsweise durch unabhängige Steuerung der Drehzahl der Verteilerscheiben eines Zweischeibenstreuers zum Grenzstreuen eingesetzt werden.

Bei dem vorgenannten Schleuderstreuer sieht die Erfindung zur Lösung der Aufgabe vor, daß
- je ein Sensor für die Aufnahme des Drehmoments und der Drehzahl des Rotationsantriebs der Verteilerscheibe vorgesehen ist,
- im Rechner für jede Drehzahl eine Massenstrom/Drehmoment-Kennlinie (ṁ/M) für die Funktion zwischen Massenstrom (ṁ) einerseits und Drehmoment (M) andererseits für diese Drehzahl hinterlegt ist und
- das Dosierorgan mittels der Ausgangsgröße des Drehmoment-Sensors und der entsprechend der Drehzahl selektierten Massenstrom/Drehmoment-Kennlinie nach Abgleich mit der Eingangsgröße für den Sollmassenstrom regelbar ist.

Bei dieser Ausführung ist eine mittels des Drehmoment-Sensors und des Drehzahl-Sensors bei einem Massenstrom ṁ = 0 gemessene Drehzahl/Leerlaufdrehmoment-Kennlinie (n/M₀) im Rechner hinterlegt.

Für eine konstruktiv vorgegebene Verteilerscheibe hängt das Leerlaufdrehmoment von der Drehzahl ab. So erhöht sich das Leerlaufdrehmoment mit steigender Drehzahl vornehmlich durch die Erhöhung des Luftwiderstandes der Verteilerscheibe, insbesondere aber der Wurfschaufeln. Diesem Umstand trägt die vorgenannte Maßnahme Rechnung.

Auch wenn ein drehzahlvariabler Antrieb bereits einige Möglichkeiten zur Beeinflussung der Düngerverteilung bietet, ist in bevorzugter Ausführung vorgesehen, daß wenigstens ein weiteres Einstellmittel zum Einstellen des Streuers auf verschiedene Arbeitsbreiten und Streugutsorten und/oder Verteilarten vorgesehen ist und für jedes Einstellmittel und/oder jede Einstellung der Einstellmittel je eine mittels des Drehmoment-Sensors und des Drehzahlsensors aufgenommene Massenstrom/Drehmoment-Kennlinie (ṁ/M) im Rechner hinterlegt ist.

Bei dem vorgenannten Schleuderstreuer, bei dem die Drehzahl eines der Einstellmittel für die Düngerverteilung ist, ist gemäß einer bevorzugten Ausführungsform vorgesehen, daß wenigstens ein weiteres Einstellmittel zum Einstellen des Streuers auf verschiedene Arbeitsbreiten und Streugutsorten und/oder Verteilarten vorgesehen ist und für jedes Einstellmittel und/oder jede Einstellung der Einstellmittel eine mittels des Drehmoment-Sensors und des Drehzahlsensors bei einem Massenstrom ṁ=0 gemessene Drehzahl/Leerlaufdrehmoment-Kennlinie (n/M₀) im Rechner hinterlegt ist.

Praktische Untersuchungen haben gezeigt, daß sich während der Streuarbeit auch bei konstanter Drehzahl das Leerlaufdrehmoment ändert. Die Ursachen sind vielfältig. Bei hydraulischen Rotationsantrieben spielt insbesondere die temperaturabhängige Viskosität der Hydraulikflüssigkeit eine Rolle. Auch bei mechanischen Antrieben beeinflußt die Temperatur die Laufeigenschaften. Schließlich kann es je nach Streugut und Witterung auf der Verteilerscheibe zu Anbackungen kommen, welche die zu beschleunigende Masse erhöhen, gegebenenfalls auch den Luftwiderstand beeinflussen.

Es ist deshalb gemäß einer weiteren Erfindung bei einem drehzahlkonstanten und -stabilen Antrieb vorgesehen, daß bei jeder Unterbrechung des Massenstroms aus der aktuellen Ausgangsgröße des Drehmomentsensors das aktuelle Leerlaufdrehmoment M₀ bestimmbar und dieser aktuelle Wert im Rechner speicherbar ist.

Dieses aktuelle Leerlaufdrehmoment kann während des Streubetriebs, beispielsweise im Vorgewende oder während des Feldwechsels, jedenfalls immer dann, wenn das Dosierorgan geschlossen oder der Behälter leer ist, aufgenommen werden. Das werkseitig aufgenommene und im Rechner hinterlegte Leerlaufdrehmoment wird dann mittels des aktuellen Leerlaufdrehmoments korrigiert und dieser Korrekturwert im Rechner gespeichert.

Bei einem drehzahlinstabilen bzw. drehzahlveränderlichen Antrieb sieht die Erfindung vor, daß bei jeder Unterbrechung des Massenstroms aus den aktuellen Ausgangsgrößen des Drehmoment-Sensors und des Drehzahl-Sensors ein aktuelles Leerlaufdrehmoment M₀ bestimmt und mit diesem Wert die hinterlegte Drehzahl/Leerlaufdrehmoment-Kennlinie (n/M₀) korrigiert wird. Diese Korrektur kann mittels nur eines Wertepaars Drehmoment/Drehzahl erfolgen.

In weiterhin vorteilhafter Ausgestaltung ist für jede Bauart des Schleuderstreuers vorgesehen, daß mittels des hinterlegten bzw. des korrigierten Leerlaufdrehmoments M₀ bzw. der korrigierten Drehzahl/ Leerlaufdrehmoment-Kennlinie (n/M₀) eine Massenstrom/Gesamt-Drehmoment-Kennlinie (ṁ/M_{G}) bestimmbar und speicherbar ist.

Diese Massenstrom/Gesamt-Drehmoment-Kennlinie ist die Regelkennlinie des Schleuderstreuers. Aus der eingegebenen Streumenge, der Arbeitsbreite und der Fahrgeschwindigkeit ergibt sich der Sollmassenstrom, dem ein Solldrehmoment auf der genannten Kennlinie entspricht. Weicht die Ausgangsgröße des Drehmoment-Sensors von diesem Soll-Gesamt-Drehmoment ab, stimmt also der Istmassenstrom mit dem Sollmassenstrom nicht überein, wird der Istmassenstrom entsprechend nachgeführt. Verändert sich während des Betriebs die Fahrgeschwindigkeit oder wird die Arbeitsbreite oder Streumenge variiert, ergibt dies einen neuen Wert für den Sollmassenstrom. Der gemessene Istmassenstrom wird dann den geänderten Verhältnissen entsprechend durch Veränderung der Einstellung des Dosierorgans auf den neuen Sollmassenstrom nachgeführt.

Die Massenstrom/Gesamtdrehmoment-Kennlinie kann im einfachsten Fall mittels nur eines bestimmten, errechneten, oder korrigierten Wertes für das Leerlaufdrehmoment korrigierbar sein. Stattdessen kann die Massenstrom/Gesamt-Drehmoment-Kennlinie aber auch durch Parallelverschiebung bzw. Streckung korrigiert werden.

Wie schon angedeutet, kommen bei einem in der Landtechnik eingesetzten Schleuderstreuer als Einstellmittel für die Düngerverteilung einzeln oder in Kombination folgende Merkmale in Frage:
- In der Ebene der Verteilerscheibe winkelverstellbare Wurfschaufeln,
- In einer zur Verteilerscheibe senkrechten Ebene verstellbare Wurfschaufel-Teile,
- Wurfschaufeln mit lageveränderlicher Abwurfkante,
- Austauschbare Wurfschaufeln unterschiedlicher Länge und/oder Form,
- Auswechselbare Verteilerscheiben mit unterschiedlichen Durchmessern und/oder mit Wurfschaufeln mit unterschiedlicher Lage ihrer Abwurfkante,
- Verstellbarer Aufgabepunkt für den Dünger auf der Verteilerscheibe,
- drehzahlvariable Antriebe für die Verteilerscheibe.

Allen diesen Einstellmitteln und ihrer unterschiedlichen Einstellung trägt die Erfindung durch die Aufnahme je einer Massenstrom/Drehmoment-Kennlinie und je eines Leerlaufdrehmomentes Rechnung.

Im Bereich der Landtechnik werden ferner sehr unterschiedliche Düngersorten eingesetzt. Ähnliches gilt bei Straßenstreuern beispielsweise für Sand, Splitt oder Salz. Diesen unterschiedlichen Streugutsorten trägt die Erfindung zunächst dadurch Rechnung, daß für jede Streugutsorte oder für Gruppen von Streugutsorten mit etwa gleichem Fließverhalten je oder nur eine Dosierorgan/Massenstrom-Kennlinie für die Abhängigkeit des Massenstroms von der Einstellung des Dosierorgans im Rechner hinterlegt und abrufbar ist und das Dosierorgan nach dieser Kennlinie in Abhängigkeit vom Sollmassenstrom regelbar ist.

Einer bestimmten Streugutsorte oder einer Gruppe verschiedener Streugutsorten mit etwa gleichem Fließverhalten ist also für einen bestimmten Sollmassenstrom eine bestimmte Stellung des Dosierorgans zugeordnet.

Im praktischen Betrieb des erfindungsgemäß ausgebildeten Schleuderstreuers wurde festgestellt, daß die Nachführung des Istmassenstroms auf den Sollmassenstrom nicht befriedigend erfolgt, insbesondere sind große Regelschwankungen festzustellen. Hier schafft die Erfindung durch eine zusätzliche Maßnahme Abhilfe. So ist erfindungsgemäß weiterhin vorgesehen, daß der Rechner eine Rechnereinheit aufweist, die
- geringe Änderungen in der Ausgangsgröße des Drehmomentsensors und gegebenenfalls des Drehzahlsensors zu einem den Ist-Massenstrom repräsentierenden Mittelwert mittelt,
- geringe Änderungen in der Einstellung des Dosierorgans zu einem die Ist-Einstellung des Dosierorgans repräsentierenden Mittelwert mittelt,
- dieses Wertepaar mit den entsprechenden Werten der Dosierorgan/Massenstrom-Kennlinie vergleicht,
- mittels der Abweichung des Wertepaars von den Werten der hinterlegten Kennlinie die hinterlegte Dosierorgan/Massenstrom- Kennlinie korrigiert und diese korrigierte Kennlinie gespeichert.

Dieser erfindungsgemäße Vorschlag beruht auf der Erkenntnis, daß zum einen durch den robusten Betrieb, zum anderen durch die Empfindlichkeit des Regelgerätes die von den Sensoren aufgenommenen Ausgangsgrößen Schwingungen zeigen mit der Folge, daß die Stellantriebe durch variierende Stellgrößen mit kurzer Periode beaufschlagt werden. Durch den erfindungsgemäßen Vorschlag werden die Regelschwingungen mit geringer Amplitude gemittelt. Weichen die gemittelten Werte für den Ist-Massenstrom und die Ist-Einstellung des Dosierorgans von dem entsprechenden Wertepaar auf der hinterlegten Dosierorgan/Massenstrom-Kennlinie ab, wird die Abweichung zur Korrektur dieser Kennlinie genutzt.

Ferner zeigen sich im praktischen Betrieb Schwingungsspitzen in Drehzahl und/oder Drehmoment, insbesondere beim Ändern der Einstellparameter, z. B. Streumenge, Fahrgeschwindigkeit. Diese Schwingungsspitzen werden durch eine entsprechende Programmierung des Rechners ausgefiltert, damit sie keinen Beitrag zur Stellgröße liefern.

Mit Vorteil sind die Massenstrom/Gesamt-Drehmoment-Kennlinien entsprechend der vorhandenen Einstellmittel und/oder der vorhandenen Einstellung derselben selektierbar und anzeigbar. Zusätzlich oder stattdessen können diese Kennlinien oder repräsentative Werte derselben auf einem Display abrufbar sein.

Entsprechend der vorgegebenen Einstellmittel und/oder deren Einstellung wird im Rechner die ihnen zugeordnete Massenstrom/Gesamt-Drehmoment-Kennlinie selektiert und kann gegebenenfalls angezeigt werden. Während der Streuarbeit wird der Istmassenstrom mittels des Drehmoment-Sensors, gegebenenfalls unter Berücksichtigung der vom Drehzahl-Sensor aufgenommenen Drehzahl, ermittelt. Bei intolerablen Abweichungen wird der Istmassenstrom entsprechend dem eingestellten Sollmassenstrom nachgeführt. Bei Unterbrechung des Massenstroms, beispielsweise im Vorgewende, wird das Leerlaufdrehmoment bzw. wenigstens ein Wertepaar für das Verhältnis Leerlaufdrehmoment/Drehzahl aufgenommen und die Massenstrom-/Gesamt-Drehmoment-Kennlinie gegebenenfalls korrigiert.

Bei der Verteilung von körnigen Düngemitteln haben sich heute weitgehend Zweischeibenstreuer aufgrund ihrer größeren Verteilgenauigkeit und großen Arbeitsbreite durchgesetzt. Bei einem solchen Zweischeibenstreuer sind erfindungsgemäß für jede Verteilerscheibe ein das Drehmoment des Rotationsantriebs und gegebenenfalls je ein die Drehzahl erfassender Sensor vorgesehen und sind die Dosierorgane für beide Verteilerscheiben vom Regelgerät unabhängig voneinander steuerbar.

Stattdessen kann für beide Verteilerscheiben auch nur ein das Drehmoment und gegebenenfalls die Drehzahl eines Rotationsantriebs erfassender Sensor vorgesehen sein und werden die Dosierorgane für beide Verteilerscheiben von der Ausgangsgröße des Sensors über das Regelgerät gemeinsam gesteuert.

Die vorgenannte Ausführung bietet sich insbesondere bei solchen Zweischeibenstreuern an, die mit einem zentralen Antrieb für beide Verteilerscheiben ausgestattet sind und folglich nur ein das Drehmoment und gegebenenfalls ein die Drehzahl dieses Zentralantriebs erfassender Sensor vorgesehen werden muß.

Für den Fall der getrennten Steuerung beider Verteilerscheiben ist für jede der Scheiben eine Schar von Massenstrom/Gesamt-Drehmoment-Kennlinien für verschiedene Verteilarten, z.B. für das Normalstreuen, das Grenz- oder Randstreuen, oder für die Spätdüngung, im Rechner hinterlegt.

Diese verschiedenen Streuarten können bei einem Zweischeibenstreuer beispielsweise durch unterschiedliche Einstellmittel bzw. unterschiedliche Einstellungen derselben realisiert werden, um beispielsweise für das Grenzstreuen ein asymmetrisches Streubild zu erzeugen. Es kann sich hierbei um zwei unterschiedlich eingestellte oder um zwei verschiedene Typen von Verteilerscheiben handeln. Stattdessen kann zusätzlich die Drehzahl der einen Scheibe und der Aufgabepunkt auf dieser Scheibe variiert werden. In diesem Fall sind die den unterschiedlichen Einstellmitteln oder ihrer unterschiedlichen Einstellung entsprechenden Massenstrom/Gesamt-Drehmoment-Kennlinien gespeichert, die entsprechend der am Traktor eingestellten Verteilart abgerufen und als Regelkennlinie für die Streuarbeit selektiert werden.

Bei der Unterbrechung des Massenstroms für nur eine Verteilerscheibe wird das aktuelle Leerlaufdrehmoment dieser Scheibe bestimmt und werden unter Abgleich mit dem vor Beginn der Streuarbeit oder bei einer vorangegangenen Massenstrom-Unterbrechung aufgenommenen Leerlaufdrehmoment die entsprechenden Massenstrom/Gesamt-Drehmoment-Kennlinien für die Einstellmittel dieser Verteilerscheibe korrigiert und die korrigierten Kennlinien gespeichert.

Bei einem Zweischeibenstreuer ist ferner vorgesehen, daß die Ist-Position des Dosierorgans bzw. eines dieses betätigenden Antriebs für jede Verteilerscheibe bei gleicher Sollstreumenge registrierbar und bei gleicher Ausgangsgröße des Sensors eine zu große Abweichung beider Positionen signalisierbar ist.

Auf diese Weise lassen sich Funktionsstörungen, die vom Antrieb nur eines Dosierorgans herrühren, feststellen und signalisieren, so daß der Benutzer die Streuarbeit unterbrechen und nach Abhilfe suchen kann, ohne daß es zu Schäden aufgrund unregelmäßiger Ausbringung des Streugutes kommt.

Bei einer plötzlichen starken Änderung der Ausgangsgröße der Drehmoment-Sensoren oder des Drehmomentsensors nur einer Verteilerscheibe gegenüber dem der anderen Verteilerscheibe wird eine Fehlermeldung signalisiert, da eine plötzliche Änderung auf die Unterbrechnung des Massenstroms, auf Funktionsstörungen im Antrieb oder auf Beschädigungen an der Verteilerscheibe schließen läßt, was wiederum zur Unterbrechung der Streuarbeit zwingt.

Bei Absinken der Ausgangröße des Drehmoment-Sensors auf die Ausgangsgröße bei Leerlauf ist eine "Behälter-Leer"-Meldung signalisierbar, so daß über die Ausgangsgröße des Drehmoment-Sensors eine Behälterkontrolle möglich und die Notwendigkeit des Nachfüllens anzeigbar ist.

Wie eingangs angedeutet, sind Schleuderstreuer, insbesondere Düngerstreuer bekannt, bei denen der Vorratsbehälter von einem Wiegesystem aufgenommen ist. Bei einem solchen Schleuderstreuer sieht die Erfindung vor, daß die zu Beginn der Streuarbeit im Vorratsbehälter vorhandene Streugutmenge als Ausgangsmenge und die während der Streuarbeit ausgebrachte Streugutmenge anhand des aufsummierten Ist-Massenstroms im Rechner speicherbar sind, die Differenz beider Werte als rechnerische Restmenge feststellbar ist, und daß die tatsächliche Restmenge mit dem Wiegesystem erfaßbar und mit der rechnerischen Restmenge abgleichbar ist und bei intolerabler Abweichung die Massenstrom/Drehmoment-Kennlinie und/oder die Massenstrom/Gesamt-Drehmoment-Kennlinie und/oder die Dosierorgan/Massenstrom-Kennlinie anhand der Abweichung korrigierbar sind.

Bei einem solchen Schleuderstreuer dient die Wiegeeinrichtung nur zur Messung der Füllmenge vor Aufnahme und nach Beendigung der Streuarbeit, nicht aber zur laufenden Überwachung der Füllmenge. Die beiden Werte lassen sich stets im Stillstand und damit sehr genau ermitteln. Sie geben ferner die Möglichkeit einer Kontrolle der Regelung und der hieraus gewonnenen Aufzeichnungen.

In weiterer vorteilhafter Ausführung ist vorgesehen, daß beim Nachfüllen von Streugut während der Streuarbeit die jeweilige Nachfüllmenge (gewogene Gesamtmenge abzüglich der gewogenen Restmenge) speicherbar und der aus der Summe der Ausgangsmenge und der Nachfüllmenge einerseits und der am Ende der Streuarbeit vorhandenen tatsächlichen Restmenge ermittelte Wert andererseits als Gesamtstreumenge speicherbar und/oder anzeigbar ist.

Mit dieser Ausbildung des Schleuderstreuers ist eine exakte Erfassung der gestreuten Fläche und der hierauf verteilten Streugutmenge möglich, was insbesondere für Lohnbetriebe, die die Bestellung für den Landwirt im Lohnauftrag durchführen, von besonderer Bedeutung ist.

Die Aufnahme des Gesamtdrehmomentes zur Bestimmung des Istmassenstroms wie auch zur Ermittlung des Leerlaufdrehmomentes ist je nach Antriebsart auszuwählen. So sind bei einem hydraulischen Antrieb der Verteilerscheibe Sensoren vorgesehen, die den Druckabfall über dem Hydromotor erfassen und als Ausgangsgröße für das Drehmoment an den Rechner liefern. Stattdessen kann der Hydromotor mit der Verteilerscheibe über ein das Reaktionsmoment aufnehmendes Bauglied mit dem Streuer verbunden sein und an dem Bauglied mindestens ein Dehnungsmeßstreifen als Drehmoment-Sensor angeordnet sein. Ist das Bauglied nach Art eines Arms ausgebildet, kann je ein Dehnungsmeßstreifen an gegenüberliegenden Seiten des Arms angeordnet sein, so daß der Dehnungsmeßstreifen die in dem Bauglied aufgrund des Reaktionsmomentes auftretenden Zug- oder Druckspannungen aufnimmt, die ein Maß für das aktuelle Drehmoment sind.

Bei einem elektrischen Antrieb mißt der Sensor die Stromaufnahme des Elektromotors, während bei einem mechanischen Antrieb der Verteilscheiben über einen Getriebezug wenigstens ein Sensor an einem durch das Drehmoment beanspruchten, insbesondere einem torsionsbeanspruchten Teil des Getriebezuges angebracht ist. Dabei kann es sich wiederum um Dehnungsmeßstreifen handeln, die als Ausgangsgröße ein elektrisches Signal an den Rechner liefern. In diesem Fall kann das vom Dehnungsmeßstreifen gelieferte Signal mittels Schleifkontakten abgegriffen werden.

Vorzugsweise jedoch ist vorgesehen, daß auf dem umlaufenden Teil des Getriebezugs wenigstens zwei Inkrementgeber mit axialem Abstand voneinander angeordnet und diesen je ein ortsfester Impulsaufnehmer zugeordnet ist, wobei die Phasenverschiebung der von beiden Aufnehmern registrierten Impulse für den Massenstrom ṁ=0 als Eichwert und die Phasenverschiebung bei einem Massenstrom ṁ > 0 als Meßwert für das aktuelle Drehmoment aufgenommen wird.

Diese Ausführungsform hat den Vorteil, daß ein berührungsloser Abgriff der von den Inkrementgebern gelieferten Impulse möglich ist, was vor allem bei den robusten Einsatzbedingungen eine Streuers von Vorteil ist.

Weist der Getriebezug, wie üblich, wenigstens eine quer zur Fahrtrichtung verlaufende Querwelle auf, die über Eckgetriebe an die Gelenkwelle bzw. Zapfwelle des Traktors angeschlossen ist, so ist die Ausbildung mit Vorteil so getroffen, daß die beiden Inkrementgeber auf wenigstens einem eine der Verteilerscheiben antreibenden Abschnitt der Querwelle angeordnet ist. Stattdessen können auch auf beiden, je eine Verteilerscheibe antreibenden Abschnitten der Querwelle zwei Inkrementgeber angeordnet sein. In letzterem Fall werden die den beiden Verteilerscheiben zugeordneten Dosierorgane getrennt und jeweils exakt geregelt.

Ist der Getriebezug, wie gleichfalls üblich, in einem geschlossenen Gehäuse angeordnet, ergibt sich der Vorteil daß die Impulsaufnehmer auf der Außenseite des Gehäuses angeordnet sein können und zusätzlich nur noch die elektrischen Zuleitungen freiliegen.

Insbesondere bei einem drehzahlveränderlichen Antrieb der Verteilerscheiben treten bei Änderung der Drehzahl Beschleunigungs- oder Verzögerungsmomente auf, die höher bzw. niedriger sind als das zur jeweils einzustellenden Drehzahl gehörige Betriebsdrehmoment. Solche Beschleunigungs- oder Verzögerungsmomente werden von der Sensorik aufgenommen, aber vom Rechner als solche erkannt und ausgefiltert, so daß sie keinen Betrag zur Stellgröße für das Dosierorgan liefern.

Nachstehend ist die Erfindung anhand mehrerer Diagramme erläutert und anhand von Ausführungsbeispielen beschrieben. In der Zeichnung zeigen:
- Fig. 1 bis 8: verschiedene Diagramme mit den maßgeblichen Regelkennlinien;
- Fig. 9: eine abgebrochene Teilansicht des Streuaggregates eines Zweischeiben-Düngerstreuers mit einem hydraulischen Antrieb
- Fig. 10: eine Draufsicht zu Fig. 9 ohne Wurfscheibe;
- Fig. 11: eine Ansicht eines Streuaggregates eines Zweischeibenstreuers mit mechanischem Antrieb;
- Fig. 12: eine Draufsicht zu Fig. 11 ohne Wurfscheiben und
- Fig. 13: eine Stirnansicht im Schnitt.

Bezüglich des Prinzips der Massenstrom/Drehmoment-Messung und der Auswertung für den Betrieb eines Streuers wird auf den Stand der Technik (DE 44 17 549 A1) verwiesen.

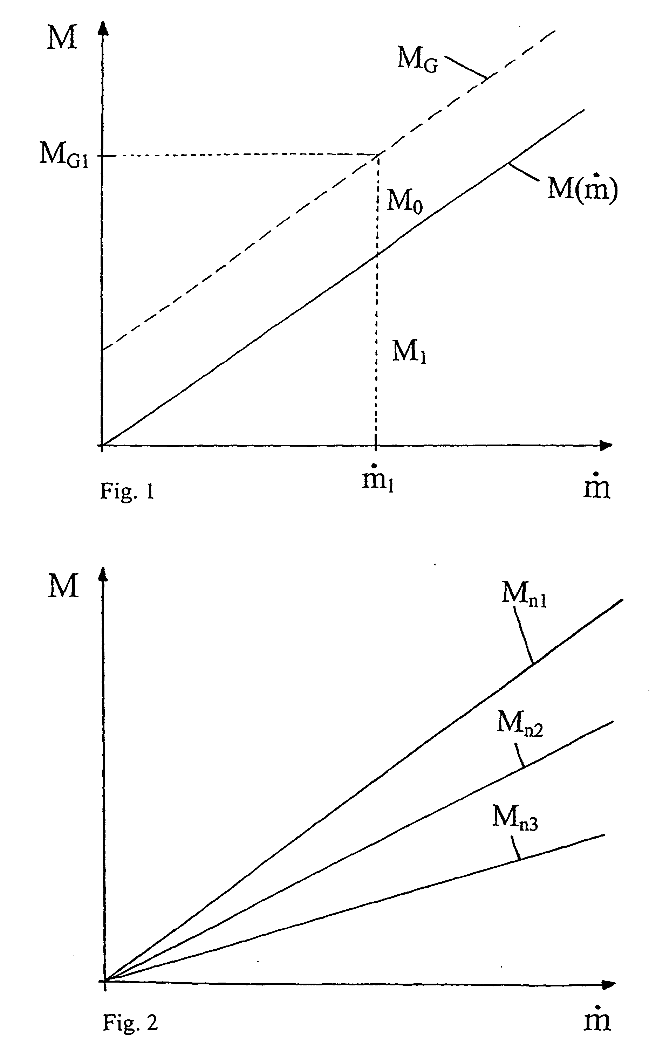

In dem Diagramm gemäß Fig. 1 ist das Verhältnis von Drehmoment M und Massenstrom m wiedergegeben. Das an einem Rotationsantrieb einer Verteilerscheibe gemessene Gesamtdrehmoment wird durch die gestrichelte Kurve M_{G} repräsentiert. Es setzt sich zusammen aus dem Leerlaufdrehmoment M₀ der Verteilerscheibe und dem durch das auf die Scheibe laufende Streugut erzeugte Massenstrom-Drehmoment M(ṁ). Das am Rotationsantrieb der Verteilerscheibe aufgenommene Drehmoment M_{G1} ist also ein Maß für den Massenstrom ṁ₁. M₀ und M(ṁ) sind zunächst abhängig von der konstruktiven Ausführung der Verteilerscheibe, die mathematisch nicht erfaßbar ist. Es wird werksseitig in einem Eichprozeß bei einer konstanten Drehzahl und einem konstanten Massenstrom (definierte Einstellung des Dosierorgans) das Gesamtdrehmoment M_{G} und das Leerlaufdrehmoment M₀ bei fehlendem Massenstrom (ṁ=0) aufgenommen. Durch Variation des Massenstroms erhält man schließlich die Massenstrom/Drehmoment-Kennlinie M(ṁ).

Wird die gleiche Verteilerscheibe mit variabler Drehzahl betrieben, so ergibt sich unter Abzug des Leerlaufdrehmoments eine Kurvenschar, wie sie in Fig. 2 gezeigt ist. Typische Drehzahlen bei Düngerstreuern sind beispielsweise 900, 700 und 500 U/min, die die Kennlinien Mₙ₁, Mₙ₂ und Mₙ₃ repräsentieren mögen. Mit der Drehzahl ist zuleich eines der Einstellmittel benannt, um beispielsweise einen Düngerstreuer auf verschiedene Arbeitsbreiten oder auf verschiedene Düngersorten oder -durch unterschiedliche Einstellung der Drehzahlen der beiden Wurfscheiben eines Zweischeibenstreuers- auf verschiedene Verteilarten (Normalstreuen nach der einen Seite, Grenzstreuen nach der anderen Seite)- einzustellen. Da die wenigsten Antriebe, die mit einer konstanten Drehzahl arbeiten, drehzahlstabil sind, muß auch für Streuer mit einem solchen Antrieb eine Kurvenschar ähnlich der Fig. 2 ermittelt und in dem Rechner hinterlegt sein.

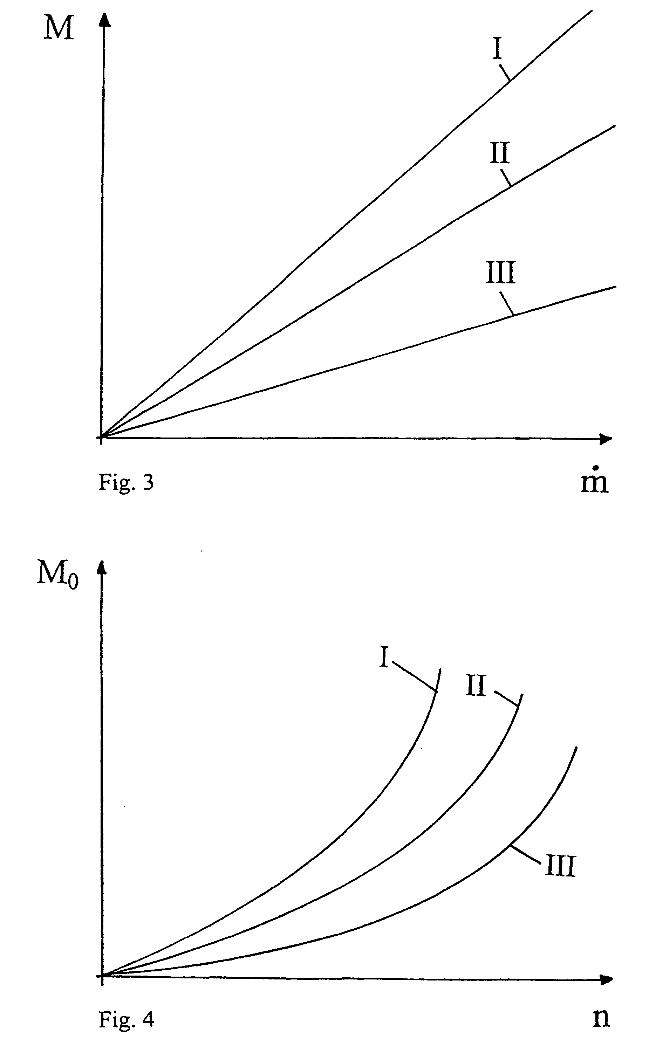

Das Drehmoment ist ferner abhängig von den konstruktiven Gegebenenheiten der Verteilerscheibe und ist das aus dem Massenstrom resultierende Drehmoment insbesondere abhängig vom Abflugpunkt der Streugutpartikel an der Scheibe, vornehmlich also vom Durchmesser der Scheibe bzw. der Länge der Wurfflügel und deren Stellung. Diese Parameter beeinflussen auch das Leerlaufdrehmoment. Das Diagramm gemäß Fig. 3 zeigt Massenstrom/Drehmoment-Kennlinien für verschiedene Typen von Verteilerscheiben I, II und III. Diese Verteilerscheiben können beispielsweise unterschiedliche Durchmesser und/oder Wurfschaufeln unterschiedlicher Länge und/oder unterschiedlicher Anzahl aufweisen. Hierdurch sind Einstellmittel für den Schleuderstreuer repräsentiert, beispielsweise große Scheiben oder Scheiben mit langen Wurfflügeln für große Arbeitsbreiten und umgekehrt kleine Scheiben mit kurzen Wurfflügeln für kleine Arbeitsbreiten bzw. bei verschiedenen Wurfscheiben auf einem Zweischeibenstreuer für unterschiedliche Verteilarten. Je nach Bauart des Streuers mit seinen Einstellmitteln wird für jedes dieser Einstellmittel eine Kennlinie gemäß Fig. 3 aufgenommen und im Rechner gespeichert. Während der Streuarbeit wird der Streuer mit nur einer dieser Kennlinien betrieben.

Gleichermaßen weisen konstruktiv unterschiedliche Verteilerscheiben verschiedene Leerlaufdrehmomente auf, die bei nicht drehzahlstabilen oder bei drehzahlvariablen Rotationsantrieben von der Drehzahl abhängig sind. Fig. 4 zeigt für jede der Verteilerscheiben I, II und III die Abhängigkeit des Leerlaufdrehmoments M₀ von der Drehzahl n. Auch diese Kennlinien werden werksseitig bei abgeschaltetem Dosiersystem erarbeitet und sind im Rechner hinterlegt und abrufbar.

Das Leerlaufdrehmoment M₀ kann sich aufgrund verschiedener Einflußfaktoren während des Betriebs ändern. Damit ändert sich auch das vom Drehmomentsensor aufgenommene Gesamtdrehmoment und muß diese Änderung des Leerlaufdrehmomentes korrigierend berücksichtigt werden, um aus der Ausgangsgröße des Drehmoment-Sensors auf den exakten Ist-Massenstrom schließen zu können. Während die Leerlauf/Drehmoment-Kennlinien gemäß Fig. 4 für die verschiedenen Verteilerscheiben I, II und III werksseitig aufgenommen und im Rechner gespeichert sind, muß das aktuelle Leerlaufdrehmoment vor Ort aufgenommen werden, und zwar ohne Beaufschlagung der Verteilerscheibe mit Streugut. Dies kann also bei leerem Streuer oder aber - während der Streuarbeit- bei jeder Unterbrechung des Massenstroms geschehen.

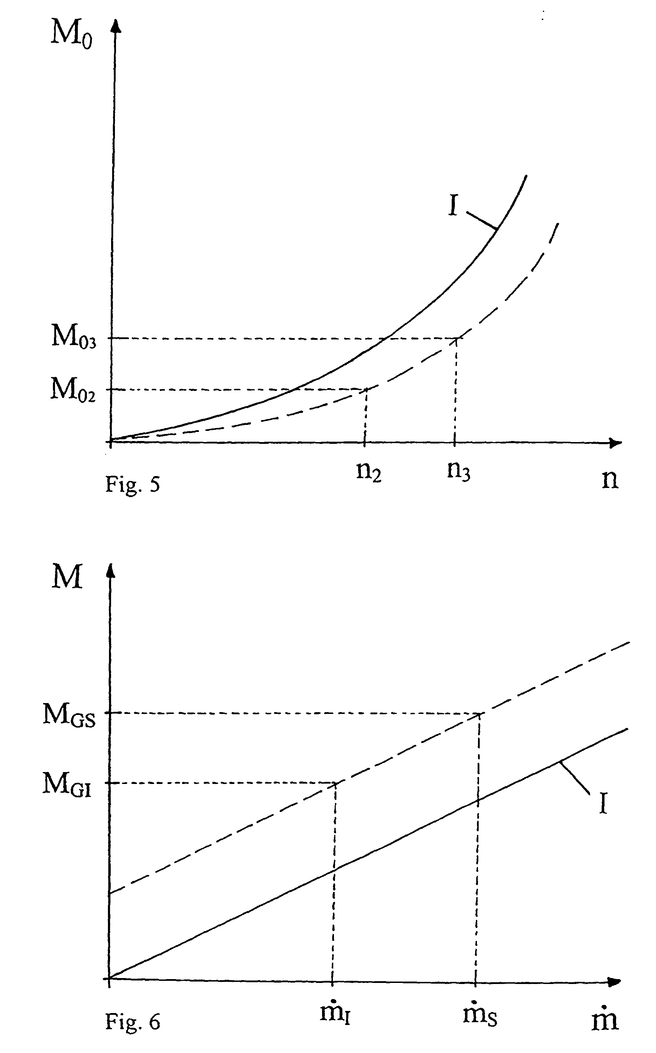

Das Diagramm gemäß Fig. 5 zeigt wiederum die Abhängigkeit des Leerlaufdrehmomentes M₀ von der Drehzahl n für die im Einsatz befindliche Scheibentype I. Die für diese Scheibentype werksseitig hinterlegte Leerlaufdrehmoment-Kennlinie ist durchgezogen wiedergegeben. Die Messung am Rotationsantrieb mittels der Drehmoment- und Drehzahlsensoren ergäbe bei einer Drehzahl n₂ ein Leerlaufdrehmoment M₀₂, das von dem für diese Drehzahl hinterlegten Wert abweicht. Damit würde auch das Drehmoment sich entsprechend ändern und würde sich ein falscher Massenstrom (Fig. 1) errechnen. Es wird deshalb durch einen Korrekturvorgang die Leerlaufdrehmoment-Kennlinie neu ermittelt und gespeichert. Dies kann beispielsweise, wie in Fig. 5 mit der gestrichelten Kennlinie angegeben, durch Streckung geschehen. Hierbei reicht in der Regel die Aufnahme eines Wertepaars M₀/n aus. An dieser korrigierten Leerlauf-Kennlinie läßt sich im Betrieb für eine gemessene aktuelle Drehzahl n₃ das tatsächliche Leerlaufdrehmoment M₀₃ ermitteln.

Mit der korrigierten Leerlaufdrehmoment-Kennlinie gemäß Fig. 5 ergibt sich für die Verteilerscheibe I eine Massenstrom/Gesamtdrehmoment-Kennlinie gemäß Fig. 6 (gestrichelte Linie). Die Regelung läuft dann wie folgt ab:

Es wird aufgrund der Fahrgeschwindigkeit, der eingegebenen Streudichte und Arbeitsbreite der Sollmassenstrom berechnet. Der Benutzer ruft im Rechner die für die eingesetzte Verteilerscheibe I werksseitig erfaßte und, wie zuvor beschrieben, korrigierte Massenstrom/Drehmoment-Kennlinie gemäß Fig. 6 auf.

Aufgrund des Sollmassenstroms ṁ_{S} läßt sich das Gesamt-Solldrehmoment M_{GS} aus der Gesamt-Drehmoment-Kennlinie, also aus der Massenstrom/Drehmoment-Kennlinie + Leerlaufdrehmoment, ermitteln. Im Betrieb wurde am Drehmomentsensor das Istdrehmoment M_{GI} aufgenommen. Nun verändert das Dosiersystem den Istmassenstrom ṁ_{I} derart, bis das Istdrehmoment M_{GI}, das vom Drehmoment-Sensor am Antrieb gemessen wird, dem Solldrehmoment M_{GS} entspricht. Verändert sich aufgrund der Außeneinflüsse (Fahrgeschwindigkeit, Arbeitsbreite, Streudichte) der Sollmassenstrom, wird aufgrund der Gesamt-Drehmoment-Kennlinie, also aus der Massenstrom/Drehmoment-Kennlinie plus dem Leerlaufdrehmoment, das neue Solldrehmoment ermittelt und das Dosiersystem derart nachgeführt, bis das Istdrehmoment wieder dem Solldrehmoment entspricht. Wenn sich die Rieseleigenschaften des Granulates verändern, ändert das Dosiersystem solange den Massenstrom, bis das Istdrehmoment dem Solldrehmoment entspricht.

Die vorgenannten Zusammenhänge gelten bei Idealbedingungen, wie sie etwa bei Stillstand der Schleuderstreuers, einem idealen Streugut und bei Fehlen jeglichen Verschleißes gegeben sind. In der Praxis und insbesondere im Streubetrieb sind diese Bedingungen in der Regel nicht gegeben. So führen Erschütterungen während des Fahrbetriebs, Drehzahlschwankungen, Änderungen des Massendrehmomentes der Verteilerscheiben etc. zu instabilen Zuständen. Der Drehmomentsensor liefert Informationen zum Ist-Gesamtdrehmoment, die in bestimmten Betriebszuständen stark schwanken, so daß der Rechner keine konstanten, sondern schwingende Regelgrößen liefert, was zu entsprechend schwingenden Stellbewegungen am Dosierorgan und bei starker Schwingungsamplitude zu großen Stellwegen mit stark schwankender Dosiermenge führt. Eine Möglichkeit zur Eliminierung dieser Regelschwingungen könnte darin bestehen, die Einflußfaktoren über einen größeren Zeitraum von jedenfalls mehr als einer Minute zu mitteln. Dadurch würde aber das System zu träge und würde es beispielsweise einer Änderung des Sollmassenstroms angesichts der Fahrgeschwindigkeit nicht ausreichend schnell folgen können, wodurch es im Falle eines Düngerstreuers zu Überdüngungen oder Unterdüngungen käme.

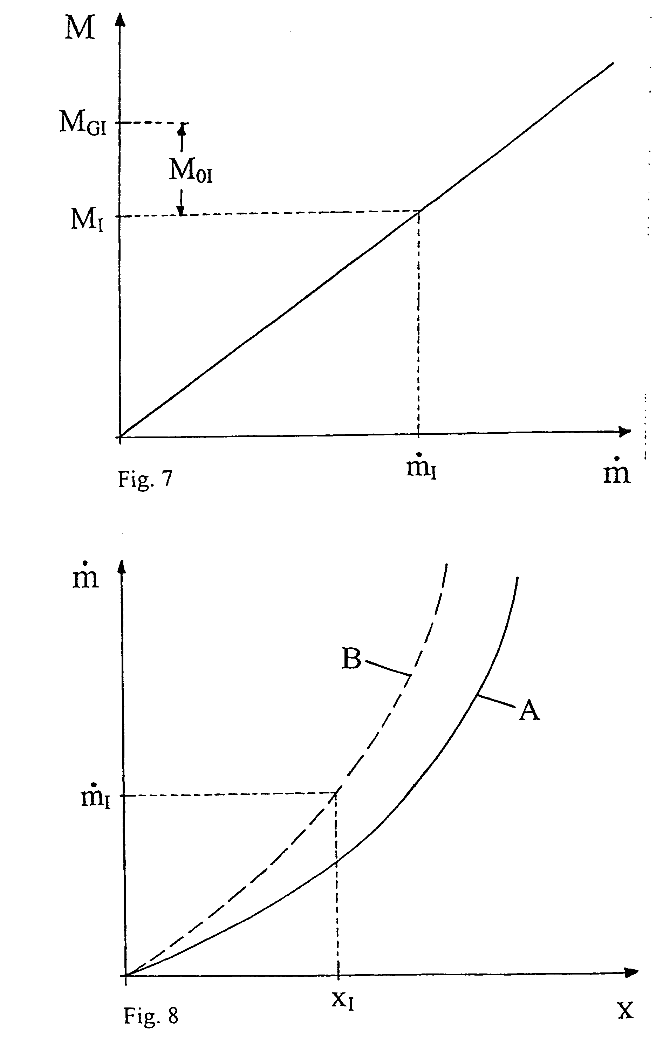

Die Erfindung hilft diesem Problem dadurch ab, daß in den Regelkreis eine zusätzliche Kennlinie eingeschaltet wird, die die Abhängigkeit zwischen der Einstellung des Dosierorgans und dem Massenstrom wiedergibt und als Dosierorgan/Massenstrom-Kennlinie bezeichnet wird. Mit dem vom Drehmomentsensor aufgenommenen Istdrehmoment wird unter Abzug des aktuellen Leerlaufdrehmoments über die Massenstrom/Drehmoment-Kennlinie der im Einsatz befindlichen Verteilerscheibe der Istmassenstrom M_{GI} (Fig. 7) bestimmt und unter Abzug des Leerlaufdrehmoments der Anteil des Ist-Massenstrommoments M_{I} ermittelt. Dem entspricht in Fig. 7 ein Istmassenstrom ṁ_{I}. Diesem Istmassenstrom ṁ_{I} entspricht wiederum auf der Dosierorgan/Massenstrom-Kennlinie A (Fig. 8) für die aktuell zu verteilende Düngersorte eine bestimmte Position x_{I} des Dosierorgans. Weicht das Wertepaar ṁ_{I}/x_{I} von der hinterlegten Kennlinie A ab, wird die Kennlinie entsprechend korrigiert. In dem in Fig. 8 gezeigten Ausführungsbeispiel geschieht dies durch Strecken der Kennlinie, so daß das Regelgerät auf der korrigierten Kennlinie B arbeitet und die Einstellung des Dosierorgans auf den Sollmassenstrom mittels dieser Kennlinie geregelt wird, bis aufgrund neuerlicher Abweichungen ein neuer Betriebspunkt ermittelt wird.

Die vorgenannte Regeltechnik ist für Einscheiben-, Zweischeiben- oder auch Mehrscheibenstreuer einsetzbar, die mit entsprechenden Einstellmitteln ausgestattet sind. Gleichermaßen läßt sie sich auf Baureihen von Schleuderstreuern anwenden, bei denen die mehreren Einstellmittel bzw. deren Einstellungen ausschließlich oder teilweise in je einem Streuer dieser Baureihe verwirklicht sind.

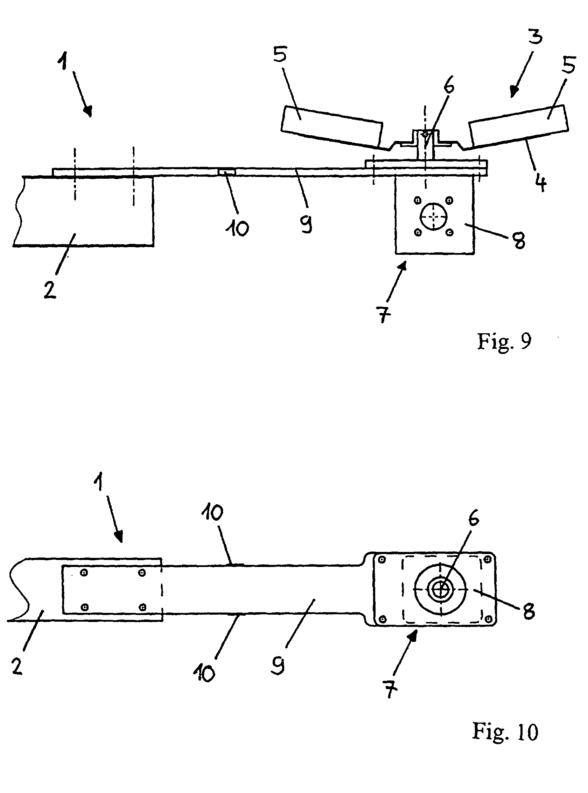

In den Figuren 9-13 sind Ausführungsbeispiele für die Drehmomenterfassung an einem Zweischeiben-Düngerstreuer gezeigt. Solche Zweischeibenstreuer, die als Anbaugeräte für einen Traktor oder als Nachläufer ausgebildet sein können, weisen auf einem Rahmen einen Vorratsbehälter auf, der sich zu zwei Trichtern verjüngt, in deren Boden je eine Auslauföffnung mit einem Dosierorgan angeordnet ist. Unterhalb der Auslauföffnungen ist das Streuaggregat 1 angeordnet, das beim Ausführungsbeispiel gemäß Fig. 9 und 10 aus einem mittig unter dem Vorratsbehälter angeordneten Träger 2, z. B. aus einem Rohrprofil oder dergleichen, und zu beiden Seiten desselben aufgenommenen Verteilerscheiben 3 besteht. Jede Verteilerscheibe 3 weist auf der eigentlichen Scheibe 4 wenigstens 2, gegebenenfalls auch mehr Wurfschaufeln 5 auf, die entweder starr und einstückig ausgebildet, aber auch auf der Scheibe winkelverstellbar oder selbst längenveränderbar sein können. In diesem Fall weisen also die Wurfschaufeln selbst die Einstellmittel für die Düngerverteilung auf. Statt dessen oder zusätzlich können die Verteilerscheiben 3 auswechselbar auf der Antriebswelle 6 eines Rotationsantriebs 7 angeordnet und gegen andere Verteilerscheiben austauschbar sein. Ein weiteres Einstellmittel kann eine nicht gezeigte Einstellung des Aufgabepunktes auf der Verteilerscheibe 3 sein. Schließlich kann auch der Rotationsantrieb 7 eine Drehzahlsteuerung aufweisen, womit gleichfalls ein Einstellmittel für die Düngerverteilung gegeben ist.

Beim Ausführungsbeispiel gemäß Fig. 9 und 10 ist der Rotationsantrieb 7 ein Hydromotor 8, der beispielsweise von der Hydraulikanlage des Traktors gespeist und von dort auch gesteuert wird. Der Rotationsantrieb 7 sitzt zusammen mit der Verteilerscheibe 3 an einem als Arm 9 ausgebildeten Bauglied, das seinerseits am Träger 2 befestigt ist.

Das Drehmoment 6 des Rotationsantriebs 7 und der Verteilerscheibe 3 wird von dem Arm 9 aufgenommen und in den Träger 2 abgeleitet. Das am Arm 9 entstehende Reaktionsmoment kann durch einen dort angebrachten Dehnungsmeßstreifen 10, vorzugsweise jedoch durch je ein an der Vorder- und Rückseite des Arms angebrachten Dehnungsmessungsstreifen aufgenommen und als elektrischer Impuls an das nicht gezeigte Regelgerät weitergeleitet werden. Zusätzlich kann die Drehzahl des Hydromotors 8 unmittelbar an der Antriebswelle 6 oder aber durch entsprechende Sensoren im Hydraulikkreislauf gemessen werden, wie auch das Drehmoment durch den Druckabfall über den Hydromotor 8 aufgenommen werden kann.

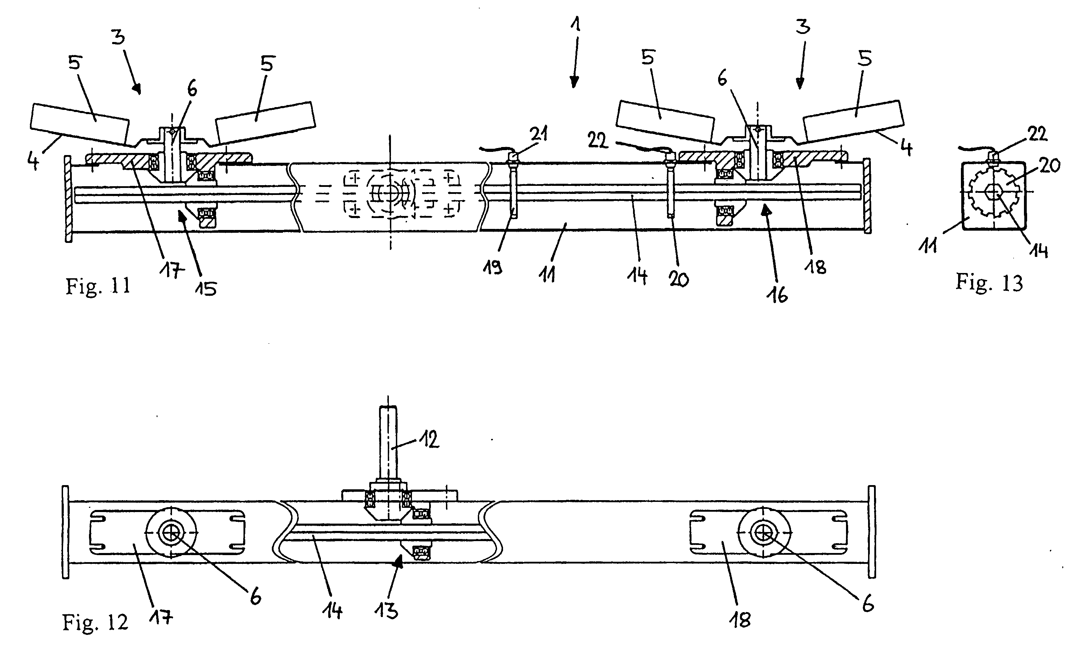

Bei dem Ausführungsbeispiel gemäß Fig. 11-13 besteht das Streuaggregat 1 aus einem selbsttragenden, rohrförmigen Gehäuse 11, in welchem ein mechanischer Getriebezug untergebracht ist, dessen Eingangswelle 12 von der Zapfwelle des Traktors über eine Gelenkwelle angetrieben wird. Die Eingangswelle 12 treibt über ein im Gehäuse 11 angeordnetes Getriebe 13 eine Querwelle 14, die über je ein Eckgetriebe 15 bzw. 16 die Abtriebswelle 6 treibt, auf der die Verteilerscheibe sitzt. Beim gezeigten Ausführungsbeispiel sind die abtreibenden Räder der Eckgetriebe 15, 16 in Konsolen 17, 18 gelagert, die ihrerseits auf dem Gehäuse oberhalb einer Aussparung verschiebbar geführt sind. Dieser Verschiebbewegung folgt das treibende Rad der Eckgetriebe 15, 16 auf der Querwelle 14. Die Verteilerscheiben 3 können also gegenüber der Auslauföffnung des Vorratsbehälters verlagert werden, wodurch der Aufgabepunkt des Streugutes verändert werden kann. Bei diesem Ausführungsbeispiel beruht die Drehmomentmessung auf der Torsion der Querwelle 14. Zu diesem Zweck sitzen auf der Querwelle 14 mit Abstand voneinander zwei Inkrementgeber 19, 20, denen je ein Impulsaufnehmer 21, 22 zugeordnet ist.

Aufgrund der Distanz der beiden Inkrementgeber wirkt sich die Torsionsbeanspruchung der Querwelle 14 in einer Phasenverschiebung der von den Impulsaufnehmern 21, 22 registrierten Impulse aus. Im Leerlauf, d. h. ohne.Beaufschlagung der Verteilerscheiben 3 mit Streugut, ergibt die Phasenverschiebung an den Impulsaufnehmern 21, 22 ein Maß für das Leerlaufdrehmoment M₀. Bei Belastung, d. h. bei Beaufschlagung der in der Zeichnung rechts wiedergegebenen Verteilerscheibe 3 mit dem Sollmassenstrom ergibt sich an den Impulsaufnehmern 21, 22 eine andere Phasenverschiebung, die ein Maß für das Gesamtdrehmoment M_{G} ist, aus dem sich durch Abzug des Leerlaufdrehmoments M₀ das Massenstrom-Drehmoment ermitteln läßt.

## Patentansprüche

1. Schleuderstreuer zum Verteilen von Streugut mit einem Vorratsbehälter, wenigstens einer rotatorisch angetriebenen Verteilerscheibe mit Wurfschaufeln, wenigstens einem Mittel zum Einstellen des Streuers auf verschiedene Arbeitsbreiten und Streugutsorten und/oder Verteilarten und einem einstellbaren Dosierorgan für jede Verteilerscheibe, das von einem rechnergestützten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom und wenigstens einer im Rechner hinterlegten Kennlinie für den Massenstrom regelbar ist, **dadurch gekennzeichnet, daß**
- ein Sensor für die Aufnahme des Drehmoments des Rotationsantriebs der Verteilerscheibe vorgesehen ist,
- im Rechner je eine Massenstrom/Drehmoment- Kennlinie (ṁ/M) für die Funktion zwischen Massenstrom (ṁ) einerseits und Drehmoment (M) andererseits für jedes Einstellmittel und/oder für jede Einstellung der Einstellmittel hinterlegt ist und
- das Dosierorgan mittels der als Stellgröße dienenden Ausgangsgröße des Drehmoment-Sensors nach Abgleich mit der Eingangsgröße für den Sollmassenstrom regelbar ist.

2. Schleuderstreuer nach Anspruch 1, **dadurch gekennzeichnet, daß** für jedes Einstellmittel und/oder jede Einstellung der Einstellmittel ein mittels des Drehmoment-Sensors bei einem Massenstrom ṁ = 0 gemessenes Leerlaufdrehmoment M₀ als Wert im Rechner hinterlegt ist.

3. Schleuderstreuer nach Anspruch 1 oder 2, **dadurch gekennzeichnet, daß** bei einem drehzahlinstabilen Rotationsantrieb für die Verteilerscheibe
- ein Sensor für die Aufnahme der Drehzahl (n) des Rotationsantriebs vorgesehen ist,
- im Rechner für jede Drehzahl eine Massenstrom/Drehmoment-Kennlinie (ṁ/M) für die Funktion zwischen Massenstrom (ṁ) und Drehmoment (M) bei dieser Drehzahl (n) hinterlegt ist und
- das Dosierorgan mittels der Ausgangsgröße des Drehmoment-Sensors und der Drehzahl entsprechend der selektierten Massenstrom/Drehmoment-Kennlinie nach Abgleich mit der Eingangsgröße für den Sollmassenstrom regelbar ist.

4. Schleuderstreuer zum Verteilen von Streugut mit einem Vorratsbehälter, wenigstens einer Verteilerscheibe mit Wurfschaufeln und einem drehzahlveränderlichen Antrieb zum Einstellen des Streuers auf verschiedene Verteilaufgaben und einem einstellbaren Dosierorgan für jede Verteilerscheibe, das von einem rechnergeschützten Regelgerät steuerbar ist, wobei die aktuelle Fahrgeschwindigkeit, die Sollstreumenge pro Fläche und die Arbeitsbreite in den Rechner eingebbar und das Dosierorgan mit dem daraus errechneten Sollmassenstrom und wenigstens einer im Rechner hinterlegten Kennlinie für den Massenstrom regelbar ist, **dadurch gekennzeichnet, daß**
- je ein Sensor für die Aufnahme des Drehmoments und der Drehzahl des Rotationsantriebs der Verteilerscheibe vorgesehen ist,
- im Rechner für jede Drehzahl eine Massenstrom/Drehmoment-Kennlinie (ṁ/M) für die Funktion zwischen Massenstrom (ṁ) einerseits und Drehmoment (M) andererseits für diese Drehzahl hinterlegt ist und
- das Dosierorgan mittels der Ausgangsgröße des Drehmoment-Sensors und der entsprechend der Drehzahl selektierten Massenstrom/Drehmoment-Kennlinie nach Abgleich mit der Eingangsgröße für den Sollmassenstrom regelbar ist.

5. Schleuderstreuer nach Anspruch 3 oder 4, **dadurch gekennzeichnet, daß** eine mittels des Drehmoment-Sensors und des Drehzahl-Sensors bei einem Massenstrom ṁ = 0 gemessene Drehzahl/Leerlaufdrehmoment-Kennlinie (n/M₀) im Rechner hinterlegt ist.

6. Schleuderstreuer nach Anspruch 4 oder 5, **dadurch gekennzeichnet, daß** wenigstens ein weiteres Einstellmittel zum Einstellen des Streuers auf verschiedene Arbeitsbreiten und Streugutsorten und/oder Verteilarten vorgesehen ist und für jedes Einstellmittel und/oder jede Einstellung der Einstellmittel je eine mittels des Drehmoment-Sensors und des Drehzahlsensors aufgenommene Massenstrom/Drehmoment-Kennlinie (ṁ/M) im Rechner hinterlegt ist.

7. Schleuderstreuer nach einem der Ansprüche 4 bis 6, **dadurch gekennzeichnet, daß** wenigstens ein weiteres Einstellmittel zum Einstellen des Streuers auf verschiedene Arbeitsbreiten und Streugutsorten und/oder Verteilarten vorgesehen ist und für jedes Einstellmittel und/oder jede Einstellung der Einstellmittel eine mittels des Drehmoment-Sensors und des Drehzahlsensors bei einem Massenstrom m=0 aufgenommene Drehzahl/Leerlaufdrehmoment-Kennlinie (n/M₀) im Rechner hinterlegt ist.

8. Schleuderstreuer nach Anspruch 1 oder 2, **dadurch gekennzeichnet, daß** bei jeder Unterbrechung des Massenstroms aus der aktuellen Ausgangsgröße des Drehmomentsensors das aktuelle Leerlaufdrehmoment M₀ bestimmbar und dieser aktuelle Wert im Rechner speicherbar ist.

9. Schleuderstreuer nach Anspruch 8, **dadurch gekennzeichnet, daß** der gemäß Anspruch 2 im Rechner hinterlegte Wert für das Leerlaufdrehmoment mittels des nach Anspruch 8 ermittelten aktuellen Werts korrigierbar und der Korrekturwert im Rechner speicherbar ist.

10. Schleuderstreuer nach einem der Anspruche 3 bis 7, **dadurch gekennzeichnet, daß** bei jeder Unterbrechung des Massenstroms aus den aktuellen Ausgangsgrößen des Drehmomentsensors und des Drehzahlsensors ein aktuelles Leerlaufdrehmoment M₀ bestimmbar und mit diesem Wert die hinterlegte Drehzahl/Leerlaufdrehmoment-Kennlinie (n/M₀) korrigierbar ist.

11. Schleuderstreuer nach Anspruch 10, **dadurch gekennzeichnet, daß** die Drehzahl/Leerlaufdrehmoment-Kennlinie (n/M₀) mittels nur eines Meßwertpaars Drehmoment/Drehzahl korrigierbar ist.

12. Schleuderstreuer nach einem der Ansprüche 1 bis 11, **dadurch gekennzeichnet, daß** mittels des hinterlegten bzw. des korrigierten Leerlaufdrehmoments (M₀) bzw. der Drehzahl/Leerlaufdrehmoment-Kennlinie (n/M₀) eine Massenstrom/Gesamt-Drehmoment-Kennlinie (ṁ/M_{G}) bestimmbar und speicherbar ist.

13. Schleuderstreuer nach einem der Ansprüche 1 bis 12, **dadurch gekennzeichnet, daß** die Massenstrom/Gesamt-Drehmoment-Kennlinie (ṁ/M_{G}) mittels nur eines bestimmten, errechneten oder korrigierten Wertes für das Leerlaufdrehmoment korrigierbar ist.

14. Schleuderstreuer nach einem der Ansprüche 1 bis 13, **dadurch gekennzeichnet, daß** die Massenstrom/Gesamt-Drehmoment-Kennlinie (ṁ/M_{G}) durch Parallelverschiebung bzw. Streckung korrigierbar ist.

15. Schleuderstreuer nach einem der Ansprüche 1 bis 14, **dadurch gekennzeichnet, daß** die Einstellmittel folgende Merkmale einzeln oder in Kombination aufweisen
- in der Ebene der Verteilerscheibe winkelverstellbare Wurfschaufeln,
- in einer zur Verteilerscheibe senkrechten Ebene verstellbare Wurfschaufel-Teile,
- Wurfschaufeln mit lageveränderlicher Abwurfkante,
- austauschbare Wurfschaufeln unterschiedlicher Länge und/oder Form,
- auswechselbare Verteilerscheiben mit unterschiedlichen Durchmessern und/oder mit Wurfschaufeln mit unterschiedlicher Lage ihrer Abwurfkante,
- einen verstellbaren Aufgabepunkt für den Dünger auf der Verteilerscheibe,
- einen drehzahlvariablen Antrieb für die Verteilterscheibe.

16. Schleuderstreuer nach einem der Ansprüche 1 bis 14, **dadurch gekennzeichnet, daß**
- für verschiedene Streugutsorten oder für Gruppen von Streugutsorten mit etwa gleichem Fließverhalten je oder nur eine Dosierorgan/Massenstrom-Kennlinie für die Abhängigkeit des Massenstroms von der Einstellung des Dosierorgans im Rechner hinterlegt und abrufbar ist,
- das Dosierorgan nach dieser Kennlinie in Abhängigkeit vom Sollmassenstrom regelbar ist,
- der Rechner eine Rechnereinheit aufweist, die
- geringe Änderungen in der Ausgangsgröße des Drehmomentsensors und gegebenenfalls des Drehzahlsensors zu einem den Ist-Massenstrom repräsentierenden Mittelwert mittelt,
- geringe Änderungen in der Einstellung des Dosierorgans zu einem die Ist-Einstellung des Dosierorgans repräsentierenden Mittelwert mittelt,
- dieses Wertepaar mit den entsprechenden Werten der Dosierorgan/Massenstrom-Kennlinie vergleicht und
- mittels der Abweichung des Wertepaars von den Werten der hinterlegten Kennlinie die hinterlegte Dosierorgan/Massenstrom-Kennlinie korrigiert und diese korrigierte Kennlinie speichert.

17. Schleuderstreuer nach Anspruch 16, **dadurch gekennzeichnet, daß** der Rechner ein Programm zum Ausblenden starker Änderungen in der Ausgangsgröße des Drehmomentsensors, gegebenenfalls des Drehzahlsensors, und in der Einstellung des Dosierorgans aufweist.

18. Schleuderstreuer nach einem der Ansprüche 1 bis 17, **dadurch gekennzeichnet, daß** die Massenstrom/Gesamt-Drehmoment-Kennlinien entsprechend der Einstellmittel und/oder der Einstellung der Einstellmittel selektierbar und anzeigbar sind.

19. Schleuderstreuer nach einem der Ansprüche 1 bis 18, **dadurch gekennzeichnet, daß** die Massenstrom/Gesamt-Drehmoment-Kennlinien oder repräsentative Werte derselben auf einem Display aufrufbar sind.

20. Schleuderstreuer nach einem der Ansprüche 1 bis 19, **dadurch gekennzeichnet, daß** bei einem Zweischeibenstreuer für jede Verteilerscheibe ein das Drehmoment und gegebenenfalls die Drehzahl des Rotationsantriebs erfassender Sensor vorgesehen ist und die Dosierorgane für beide Verteilerscheiben vom Regelgerät unabhängig voneinander steuerbar sind.

21. Schleuderstreuer nach einem der Ansprüche 1 bis 19, **dadurch gekennzeichnet, daß** bei einem Zweischeibenstreuer für beide Verteilerscheiben nur ein das Drehmoment und gegebenenfalls die Drehzahl eines Rotationsantriebs erfassender Sensor vorgesehen ist und die Dosierorgane für beide Verteilerscheiben vom Regelgerät gemeinsam steuerbar sind.

22. Schleuderstreuer nach einem der Ansprüche 1 bis 19, **dadurch gekennzeichnet, daß** bei einem Zweischeibenstreuer mit einem zentralen Antrieb für beide Verteilerscheiben ein das Drehmoment und gegebenenfalls die Drehzahl des Zentralantriebs erfassender Sensor vorgesehen ist und die Dosierorgane beider Verteilerscheiben von dem Regelgerät steuerbar sind.

23. Schleuderstreuer nach einem der Ansprüche 1 bis 22, **dadurch gekennzeichnet, daß** für jede der beiden Verteilerscheiben eine Schar von Massenstrom/Gesamt-Drehmoment-Kennlinien (ṁ/M_{G}) für verschiedene Verteilarten im Rechner hinterlegt ist.

24. Schleuderstreuer nach einem der Ansprüche 1 bis 22, **dadurch gekennzeichnet, daß** bei einem Zweischeibenstreuer mit zwei unterschiedlichen Einstellmitteln bzw. unterschiedlicher Einstellung derselben die ihnen jeweils eigenen Massenstrom/Gesamt- Drehmoment-Kennlinien (ṁ/M_{G}) gespeichert sind.

25. Schleuderstreuer nach einem der Ansprüche 20 bis 24, **dadurch gekennzeichnet, daß** bei Unterbrechung des Massenstroms für nur eine Verteilerscheibe das aktuelle Leerlaufdrehmoment dieser Scheibe bestimmbar und unter Abgleich mit der vor Beginn der Streuarbeit oder einer vorangegangenen Massenstrom-Unterbrechung aufgenommenen Leerlaufdrehmoment die entsprechenden Massenstrom/Gesamt- Drehmoment-Kennlinien (ṁ/M_{G}) für die Einstellmittel dieser Verteilerscheibe korrigierbar sind und die korrigierte Kennlinie speicherbar ist.

26. Schleuderstreuer nach einem der Ansprüche 1 bis 25, **dadurch gekennzeichnet, daß** die Ist-Position des Dosierorgans bzw. eines dieses betätigenden Antriebs für jede Verteilerscheibe bei gleicher Sollstreumenge registrierbar und bei gleicher Ausgangsgröße des Drehmoment-Sensors eine zu große Abweichung beider Positionen signalisierbar ist.

27. Schleuderstreuer nach einem der Ansprüche 1 bis 26, **dadurch gekennzeichnet, daß** eine plötzliche starke Änderung der Ausgangsgröße der Drehmoment-Sensoren oder des Drehmoment-Sensors nur einer Verteilerscheibe gegenüber derjenigen des Drehmoment-Sensors der anderen Verteilerscheibe als Fehlermeldung signalisierbar ist.

28. Schleuderstreuer nach einem der Ansprüche 1 bis 27, **dadurch gekennzeichnet, daß** bei Absinken der Ausgangsgröße des Drehmoment-Sensors auf die Ausgangsgröße bei Leerlauf eine "Behälter leer"-Meldung signalisierbar ist.

29. Schleuderstreuer nach einem der Ansprüche 1 bis 28, **dadurch gekennzeichnet, daß** der Vorratsbehälter von einem Wiegesystem aufgenommen ist, daß die zu Beginn der Streuarbeit im Vorratsbehälter vorhandene Streugutmenge als Ausgangsmenge im Rechner speicherbar ist, die während der Streuarbeit ausgebrachte Streugutmenge anhand des aufsummierten Ist-Massenstroms speicherbar und die Differenz beider Werte als rechnerische Restmenge feststellbar ist, und daß die tatsächliche Restmenge mit dem Wiegesystem erfaßbar und mit der rechnerischen Restmenge abgleichbar ist und bei intolerabler Abweichung die Massenstrom/Drehmoment-Kennlinie und/oder die Massenstrom/Gesamt-Drehmoment-Kennlinie und/oder die Dosierorgan/Massenstrom-Kennlinie anhand der Abweichung korrigierbar sind.

30. Schleuderstreuer nach einem der Ansprüche 1 bis 29, **dadurch gekennzeichnet, daß** beim Nachfüllen von Streugut während der Streuarbeit die jeweilige Nachfüllmenge (gewogene Gesamtmenge abzüglich der gewogenen Restmenge) speicherbar und der aus der Summe der Ausgangsmenge und der Nachfüllmengen einerseits und der am Ende der Streuarbeit vorhandenen tatsächlichen Restmenge ermittelte Wert als Gesamtstreumenge speicherbar und/oder anzeigbar ist.

31. Schleuderstreuer nach einem der Ansprüche 1 bis 30, **dadurch gekennzeichnet, daß** bei einem hydraulischen Antrieb der Verteilerscheibe Sensoren den Druckabfall über dem Hydromotor erfassen und als Ausgangsgröße für das Drehmoment an den Rechner liefern.

32. Schleuderstreuer nach einem der Ansprüche 1 bis 30, **dadurch gekennzeichnet, daß** bei einem hydraulischen Antrieb der Verteilerscheibe der Hydromotor mit der Verteilerscheibe über ein das Reaktionsmoment des Hydromotors aufnehmendes Bauglied mit dem Streuer verbunden ist, und daß an dem Bauglied mindestens ein Dehnungsmeßstreifen als Drehmoment-Sensor angeordnet ist.

33. Schleuderstreuer nach Anspruch 32, **dadurch gekennzeichnet, daß** das Bauglied als Arm ausgebildet ist und je ein Dehnungsmeßstreifen an gegenüberliegenden Seiten des Arms angeordnet ist.

34. Schleuderstreuer nach einem der Ansprüche 1 bis 30, **dadurch gekennzeichnet, daß** bei einem elektrischen Antrieb der Verteilerscheibe der Sensor die Stromaufnahme des Elektromotors mißt und als Ausgangsgröße für das Drehmoment an den Rechner liefert.

35. Schleuderstreuer nach einem der Ansprüche 1 bis 30, **dadurch gekennzeichnet, daß** bei einem mechanischen Antrieb der Verteilerscheibe über einen Getriebezug wenigstens ein Sensor an einem Drehmoment-beanspruchten Teil des Getriebezugs angeordnet ist, der als Ausgangsgröße ein elektrisches Signal an den Rechner liefert.

36. Schleuderstreuer nach Anspruch 35, **dadurch gekennzeichnet, daß** der Sensor ein Dehnungsmeßstreifen ist.

37. Schleuderstreuer nach Anspruch 35 oder 36, **dadurch gekennzeichnet, daß** der Sensor mit dem ihn aufnehmenden Teil umläuft und das gelieferte elektrische Signal mittels Schleifkontakten abgreifbar ist.

38. Schleuderstreuer nach Anspruch 35, **dadurch gekennzeichnet, daß** auf dem umlaufenden, Drehmoment-beanspruchten Teil des Getriebezugs wenigstens zwei Inkrementgeber mit axialem Abstand voneinander angeordnet und diesen je ein ortsfester Impulsaufnehmer zugeordnet ist, und daß die Phasenverschiebung der von beiden Aufnehmern registrierten Impulse für den Massenstrom ṁ=0 als Eichwert und die Phasenverschiebung bei einem Massenstrom ṁ>0 als Meßwert für das aktuelle Drehmoment aufgenommen wird.

39. Schleuderstreuer nach Anspruch 38, wobei der Getriebezug wenigstens eine quer zur Fahrtrichtung verlaufende an die Gelenkwelle des Traktors über Eckgetriebe angeschlossene Querwelle aufweist, **dadurch gekennzeichnet, daß** die beiden Inkrementgeber auf wenigstens einem eine der Verteilerscheiben antreibenden Abschnitt der Querwelle angeordnet sind.

40. Schleuderstreuer nach Anspruch 38 oder 39, **dadurch gekennzeichnet, daß** die Impulsaufnehmer auf der Außenseite eines den Getriebezug aufnehmenden Gehäuses angeordnet sind.

41. Schleuderstreuer nach einem der Ansprüche 1 bis 38, **dadurch gekennzeichnet, daß** ein bei einer Drehzahländerung von dem Drehmomentsensor aufgenommenes Beschleunigungs- oder Verzögerungsmoment im Rechner mittels eines Programms ausgefiltert wird und keinen Beitrag zur Stellgröße für das Dosierorgan liefert.

## Claims

1. Centrifugal spreader for distributing spreading material having a storage container, at least one distributor plate, driven in rotary manner and having casting or spreading shovels, at least one means for setting the spreader to different working widths and spreading material types and/or distribution modes and an adjustable dosing member for each distributor plate, which is controllable by a computerized control unit, the current running speed, the desired spreading quantity per surface area and the working width being inputtable into the computer and the dosing member is controllable with the desired mass flow calculated therefrom and at least one mass flow characteristic filed in the computer, **characterized in that**
- a sensor is provided for recording the torque of the rotary drive of the distributor plate,
- in the computer is filed in each case a mass flow/torque characteristic (ṁ/M) for the function between the mass flow (ṁ) on the one hand and the torque (M) on the other for each setting means and/or for each setting of the setting means and
- the dosing member can be controlled by means of the torque sensor output quantity serving as the control variable after balancing with the input quantity for the desired mass flow.

2. Centrifugal spreader according to claim 1, **characterized in that** for each setting means and/or for each setting of the setting means a no-load torque M₀ measured by means of the torque sensor at a mass flow ṁ = 0 is filed as a value in the computer.

3. Centrifugal spreader according to claim 1 or 2, **characterized in that** in the case of a speed-unstable rotary drive for the distributor plate
- a sensor is provided for recording the speed (n) of the rotary drive,
- in the computer is filed for each speed a mass flow/torque characteristic (ṁ/M) for the function between the mass flow (ṁ) and the torque (M) at this speed (n) and
- the dosing member can be controlled by means of the output quantity of the torque sensor and the speed corresponding to the selected mass flow/torque characteristic after balancing with the input quantity for the desired mass flow.

4. Centrifugal spreader for distributing spreading material with a storage tank, at least one distributor plate with spreading shovels and a speed-variable drive for adjusting the spreader to different distribution tasks and an adjustable dosing member for each distributor plate, which is controllable by a computerized control unit, the current running speed, desired spreading quantity per surface area and the working width being inputtable into the computer and the dosing member is controllable with the desired mass flow calculated therefrom and at least one mass flow characteristic filed in the computer, **characterized in that**
- in each case a sensor is provided for recording the torque and the speed of the rotary drive of the distributor plate,
- in the computer is filed for each speed a mass flow/torque characteristic (ṁ/M) for the function between the mass flow (ṁ) on the one hand and the torque (M) on the other for said speed and
- the dosing member is controllable by means of the output quantity of the torque sensor and the mass flow/torque characteristic selected in accordance with the speed following balancing with the input quantity for the desired mass flow.

5. Centrifugal spreader according to claim 3 or 4, **characterized in that** a speed/no-load torque characteristic (n/M₀) measured by means of the torque sensor and the speed sensor at a mass flow ṁ = 0 is filed in the computer.

6. Centrifugal spreader according to claim 4 or 5, **characterized in that** at least one further setting means is provided for setting the spreader to different working widths and spreading material types and/or distribution modes and for each setting means and/or each setting of the setting means is filed in the computer a mass flow/torque characteristic (ṁ/M) recorded in each case by means of the torque sensor and the speed sensor.

7. Centrifugal spreader according to one of the claims 4 to 6, **characterized in that** at least one further setting means is provided for setting the spreader to different working widths and spreading material types and/or distribution modes and for each setting means and/or each setting of the setting means is filed in the computer a speed/no-load torque characteristic (n/M₀) recorded by means of the torque sensor and the speed sensor at a mass flow ṁ = 0.

8. Centrifugal spreader according to claim 1 or 2, **characterized in that** for each interruption of the mass flow it is possible to determine the current no-load torque M₀ from the current output quantity of the torque sensor and said current value can be stored in the computer.

9. Centrifugal spreader according to claim 8, **characterized in that** the value for the no-load torque filed in the computer according to claim 2 can be corrected by means of the current value determined according to claim 8 and the corrected value can be stored in the computer.

10. Centrifugal spreader according to one of the claims 3 to 7, **characterized in that** for each interruption of the mass flow it is possible to determine a current no-load torque M₀ from the current output quantities of the torque sensor and the speed sensor and the filed speed/no-load torque characteristic (n/M₀) can be corrected with this value.

11. Centrifugal spreader according to claim 10, **characterized in that** the speed/no-load moment characteristic (n/M₀) can be corrected by means of a single torque/speed measured value pair.

12. Centrifugal spreader according to one of the claims 1 to 11,
**characterized in that** a mass flow/total torque characteristic (ṁ/M_{G}) can be determined and stored by means of the filed or corrected no-load torque (M₀) and/or the speed/no-load torque characteristic (n/M₀).

13. Centrifugal spreader according to one of the claims 1 to 12,
**characterized in that** the mass flow/total torque characteristic (ṁ/M_{G}) can be corrected by means of a specific, calculated or corrected value for the no-load torque.

14. Centrifugal spreader according to one of the claims 1 to 13,
**characterized in that** the mass flow/total torque characteristic (ṁ/M_{G}) can be corrected by parallel displacement and/or stretching.

15. Centrifugal spreader according to one of the claims 1 to 14,
**characterized in that** the setting means have the following features either individually or in combination
- angularly adjustable spreading shovels in the distributor plate plane,
- adjustable spreading shovel parts in a plane perpendicular to the distributor plate,
- spreading shovels with position-variable release edge,
- replaceable spreading shovels of different length and/or shape,
- replaceable distributor plates with different diameters and/or with spreading shovels having a different release edge position,
- an adjustable feed point for the fertilizer on the distributor plate,
- a speed-variable drive for the distributor plate.

16. Centrifugal spreader according to one of the claims 1 to 14,
**characterized in that**
- for different spreading material types or for groups of spreading material types with roughly the same flow behaviour in each case one or one dosing member/mass flow characteristic for the dependence of the mass flow on the dosing member setting is filed in the computer and can be polled,
- the dosing member is controllable according to this characteristic as a function of the desired mass flow,
- the computer has a computer unit, which
- averages minor changes in the output quantity of the torque sensor and optionally the speed sensor to a mean value representing the actual mass flow,
- averages minor changes in the setting of the dosing member to a mean value representing the actual setting of the dosing member,
- compares said value pair with the corresponding values of the dosing member/mass flow characteristic and
- by means of the divergence of the value pair from the values of the filed characteristic, corrects the filed dosing member/mass flow characteristic and stores said corrected characteristic.

17. Centrifugal spreader according to claim 16, **characterized in that** the computer has a program for cancelling out major changes in the output quantity of the torque sensor, optionally the speed sensor and in the dosing member setting.

18. Centrifugal spreader according to one of the claims 1 to 17,
**characterized in that** the mass flow/total torque characteristics can be selected and displayed corresponding to the setting means and/or the setting of the setting means.

19. Centrifugal spreader according to one of the claims 1 to 18,
**characterized in that** the mass flow/total torque characteristics or representative values thereof can be polled on a display.

20. Centrifugal spreader according to one of the claims 1 to 19,
**characterized in that** with a two-plate spreader for each distributor plate is provided a sensor determining the torque and optionally the speed of the rotary drive and the dosing members for both distributor plates can be controlled independently of one another by the control unit.

21. Centrifugal spreader according to one of the claims 1 to 19,
**characterized in that** in the case of a two-plate spreader for both distributor plates is provided a single sensor determining the torque and optionally the speed of a rotary drive and the dosing members for both distributor plates are jointly controllable by the control unit.

22. Centrifugal spreader according to one of the claims 1 to 19,
**characterized in that** in the case of a two-plate spreader with a central drive for both distributor plates, a sensor determining the torque and optionally the speed of the central drive is provided and the dosing members for both distributor plates are controllable by the control unit.

23. Centrifugal spreader according to one of the claims 1 to 22,
**characterized in that** for each of the two distributor plates a group of mass flow/total torque characteristics (ṁ/M_{G}) for different distribution modes is filed in the computer.

24. Centrifugal spreader according to one of the claims 1 to 22,
**characterized in that** in the case of a two-plate spreader with two different setting means or different settings thereof, their own mass flow/total torque characteristics (ṁ/M_{G}) are stored.

25. Centrifugal spreader according to one of the claims 20 to 24,
**characterized in that** on interrupting the mass flow for only one distributor plate the current no-load torque of said plate can be determined and accompanied by balancing with the no-load torque recorded prior to the start of spreading or a preceding mass flow interruption, the corresponding mass flow/total torque characteristics (ṁ/M_{G}) for the setting means of said distributor plate can be corrected and the corrected characteristic can be stored.

26. Centrifugal spreader according to one of the claims 1 to 25,
**characterized in that** the actual position of the dosing member or a drive actuating the same for each distributor plate for the same desired spreading quantity can be recorded and with the same output quantity of the torque sensor an excessive divergence of the two positions can be indicated.

27. Centrifugal spreader according to one of the claims 1 to 26,
**characterized in that** a sudden, major change to the output quantity of the torque sensors or the torque sensor of only one distributor plate can be indicated as an error or fault compared with that of the torque sensor of the other distributor plate.

28. Centrifugal spreader according to one of the claims 1 to 27,
**characterized in that** when the output quantity of the torque sensor drops to the output quantity under no-load conditions, a "container empty" indication can be given.

29. Centrifugal spreader according to one of the claims 1 to 28,
**characterized in that** the storage container is received by a weighing system, that the spreading material quantity present in the storage container at the start of spreading can be stored as the starting quantity in the computer, the spreading material quantity discharged during spreading can be stored on the basis of the summated actual mass flow and the difference between the two values can be established as a mathematical residual quantity, and that the actual residual quantity can be determined with the weighing system and balanced with the mathematical residual quantity and in the case of an unacceptable divergence the mass flow/torque characteristic and/or the mass flow/total torque characteristic and/or the dosing member/mass flow characteristic can be corrected by means of the divergence.

30. Centrifugal spreader according to one of the claims 1 to 29,
**characterized in that** in the case of refilling spreading material during spreading, the particular refill quantity (weighed total quantity, less the weighed residual quantity) can be stored and the value determined from the sum of the starting quantity and the refilling quantities on the one hand and the actual residual quantity present at the end of spreading can be stored and/or displayed as the total spreading quantity.

31. Centrifugal spreader according to one of the claims 1 to 30,
**characterized in that** in the case of a hydraulic drive of the distributor plate, sensors determine the pressure drop via the hydraulic motor and supply same to the computer as the output quantity for the torque.

32. Centrifugal spreader according to one of the claims 1 to 30,
**characterized in that** in the case of a hydraulic drive of the distributor plate, the hydraulic motor with the distributor plate is linked with the spreader by means of a structural member receiving the moment of reaction of the hydraulic motor, and that at least one strain gauge is placed on the structural member as a torque sensor.

33. Centrifugal spreader according to claim 32, **characterized in that** the structural member is constructed as an arm and in each case one strain gauge is placed on opposite sides of the arm.

34. Centrifugal spreader according to one of the claims 1 to 30,
**characterized in that** in the case of an electrical drive of the distributor plate, the sensor measures the power consumption of the electric motor and supplies it as an output quantity for the torque to the computer.

35. Centrifugal spreader according to one of the claims 1 to 30,
**characterized in that** in the case of a mechanical drive of the distributor plate by means of a gear train, at least one sensor is placed on a torque-stressed part of the gear train supplying as the output quantity an electrical signal to the computer.

36. Centrifugal spreader according to claim 35, **characterized in that** the sensor is a strain gauge.

37. Centrifugal spreader according to claim 35 or 36, **characterized in that** the sensor revolves with the part receiving it and the electric signal supplied can be tapped by sliding contacts.

38. Centrifugal spreader according to claim 35, **characterized in that** on the revolving torque-stressed part of the gear train are provided at least two axially spaced increment pickups and with the same is in each case associated a fixed pulse recorder, and that the phase shift of the pulses recorded by the two pickups for the mass flow ṁ = 0 is recorded as a standard value and the phase shift for a mass flow ṁ > 0 as the measured value for the current torque.

39. Centrifugal spreader according to claim 38, where the gear train has at least one cross shaft running transversely to the travel direction and connected to the tractor propeller shaft by means of a corner gear,
**characterized in that** the two increment pickups are located on at least one cross shaft section driving the distributor plates.

40. Centrifugal spreader according to claim 38 or 39, **characterized in that** the pulse recorders are positioned on the outside of a casing receiving the gear train.

41. Centrifugal spreader according to one of the claims 1 to 38,
**characterized in that** an acceleration or deceleration moment recorded by the torque sensor in the case of a speed change is filtered out in the computer by means of a program and makes no contribution to the control variable for the dosing member.

## Revendications

1. Epandeur centrifuge pour la distribution de produit d'épandage comprenant un réservoir, au moins un disque distributeur entraîné de manière rotative présentant des godets d'éjection, au moins un moyen de réglage de l'épandeur en fonction de différentes largeurs de travail et différentes sortes de produits d'épandage et/ou différents modes de distribution, et un organe de dosage réglable pour chaque disque distributeur pouvant être commandé par un organe de réglage assisté par microcalculateur, dans lequel la vitesse de déplacement effective, la quantité à épandre prévue par surface et la largeur de travail peuvent être introduits dans le microcalculateur et dans lequel l'organe de dosage est réglable à partir de la valeur de consigne du flux massique qui en aura été déduite et d'au moins une courbe caractéristique pour le flux massique, **caractérisé en ce que** :
. l'on prévoit un détecteur pour la réception du couple de rotation de l'entraînement rotatif du disque distributeur,
. l'on mémorise dans le microcalculateur à chaque fois une courbe caractéristique flux massique/couple de rotation (ṁ/M) pour la fonction entre le flux massique (ṁ) d'une part et le couple de rotation (M) d'autre part pour chaque moyen de réglage et/ou pour chaque réglage des moyens de réglage, et
. l'on peut régler l'organe de dosage au moyen de la grandeur de sortie du détecteur de couple de rotation servant de grandeur de réglage après comparaison avec la grandeur d'entrée pour le flux massique de consigne.

2. Epandeur centrifuge selon la revendication 1, **caractérisé en ce que** l'on mémorise comme valeur dans le microcalculateur pour chaque moyen de réglage et/ou chaque réglage des moyens de réglage un couple de rotation à vide M₀ mesuré au moyen du détecteur de couple de rotation pour un flux massique m = 0.

3. Epandeur centrifuge selon la revendication 1 ou 2, **caractérisé en ce que** dans le cas d'un entraînement rotatif à vitesse de rotation instable pour le disque distributeur,
. l'on prévoit un détecteur pour l'enregistrement de la vitesse de rotation (n) de l'entraînement rotatif,
. l'on mémorise dans le microcalculateur pour chaque vitesse de rotation une courbe caractéristique flux massique/couple de rotation (ṁ/M) pour la fonction entre flux massique (ṁ) et couple de rotation (M) pour cette vitesse de rotation (n), et
. l'on peut régler l'organe de dosage au moyen de la grandeur de sortie du détecteur de couple de rotation et de la vitesse de rotation conformément à la courbe caractéristique flux massique/couple de rotation sélectionnée après comparaison avec la grandeur d'entrée pour le flux massique de consigne.

4. Epandeur centrifuge pour la distribution de produit d'épandage comprenant un réservoir, au moins un disque distributeur présentant des godets d'éjection et un entraînement à vitesse de rotation variable pour le réglage de l'épandeur en fonction de différentes tâches de distribution, et un organe de dosage réglable pour chaque disque distributeur pouvant être commandé par un organe de réglage assisté par microcalculateur, la vitesse de déplacement effective, dans lequel la quantité à épandre prévue par surface et la largeur de travail peut être introduite dans le microcalculateur et dans lequel l'organe de dosage est réglable à partir de la valeur de consigne du flux massique qui en aura été déduite et d'au moins une courbe caractéristique pour le flux massique mémorisée dans le microcalculateur, **caractérisé en ce que** :
. l'on prévoit un détecteur pour l'enregistrement du couple de rotation de l'entraînement rotatif du disque distributeur,
. l'on mémorise dans le microcalculateur à chaque fois une courbe caractéristique flux massique/couple de rotation (ṁ/M) pour la fonction entre le flux massique (ṁ) d'une part et le couple de rotation (M) d'autre part pour chaque moyen de réglage et/ou pour chaque réglage des moyens de réglage, et
. l'on peut régler l'organe de dosage au moyen de la grandeur de sortie du détecteur de couple de rotation servant de grandeur de réglage après comparaison avec la grandeur d'entrée pour le flux massique de consigne.

5. Epandeur centrifuge selon la revendication 3 ou 4, **caractérisé en ce que** l'on mémorise dans le microcalculateur une courbe caractéristique vitesse de rotation/couple de rotation à vide (n/M₀) mesurée au moyen du détecteur de couple de rotation et du détecteur de vitesse de rotation pour un flux massique ṁ = 0.

6. Epandeur centrifuge selon la revendication 4 ou 5, **caractérisé en ce que** l'on prévoit au moins un moyen de réglage supplémentaire pour le réglage de l'épandeur en fonction de différentes largeurs de travail, de différentes sortes de produits d'épandage et/ou de différents modes de distribution et **en ce que** pour chaque moyen de réglage et/ou chaque réglage des moyens de réglage, on mémorise dans l'microcalculateur à chaque fois une courbe caractéristique flux massique/couple de rotation (ṁ/M) enregistrée au moyen du détecteur de couple de rotation et du détecteur de vitesse de rotation

7. Epandeur centrifuge selon l'une quelconque des revendications 4 à 6, **caractérisé en ce que** l'on prévoit au moins un moyen de réglage supplémentaire pour le réglage de l'épandeur en fonction de différentes largeurs de travail, de différentes sortes de produits d'épandage et/ou de différents modes de distribution et **en ce que** pour chaque moyen de réglage et/ou chaque réglage des moyens de réglage on mémorise dans le microcalculateur une courbe caractéristique vitesse de rotation/couple de rotation à vide (n/M₀) enregistrée au moyen du détecteur de couple de rotation et du détecteur de vitesse de rotation pour un flux massique ṁ=0.

8. Epandeur centrifuge selon l'une quelconque des revendications 1 ou 2, **caractérisé en ce que** l'on peut déterminer le couple de rotation à vide effective M₀ à chaque interruption du flux massique à partir de la grandeur de sortie effective du détecteur de couple de rotation, et **en ce que** cette valeur effective peut être mémorisée dans le microcalculateur.

9. Epandeur centrifuge selon la revendication 8, **caractérisé en ce que** la valeur mémorisée dans le microcalculateur selon la revendication 2 pour le couple de rotation à vide peut être corrigée au moyen de la valeur effective déterminée selon la revendication 8 et **en ce que** l'on peut mémoriser dans le microcalculateur la valeur de correction.

10. Epandeur centrifuge selon l'une quelconque des revendications 3 à 7, **caractérisé en ce que** l'on peut déterminer un couple de rotation à vide effective M₀ à chaque interruption du flux massique à partir des grandeurs de sortie effectives du détecteur de couple de rotation et du détecteur de vitesse de rotation et **en ce que** l'on peut corriger par cette valeur la courbe caractéristique vitesse de rotation/couple de rotation à vide (n/M₀) mémorisée.

11. Epandeur centrifuge selon la revendication 10, **caractérisé en ce que** la courbe caractéristique vitesse de rotation/couple de rotation à vide (n/M₀) peut être corrigée par seulement deux valeurs mesurées couple de rotation/vitesse de rotation.

12. Epandeur centrifuge selon l'une quelconque des revendications 1 à 11, **caractérisé en ce que** l'on peut déterminer et mettre en mémoire au moyen du couple de rotation à vide (M₀) mémorisé ou corrigé ou au moyen de la courbe caractéristique vitesse de rotation/couple de rotation à vide (n/M₀) une courbe caractéristique flux massique/couple de rotation général (ṁ/M_{G}).

13. Epandeur centrifuge selon l'une quelconque des revendications 1 à 12, **caractérisé en ce que** l'on peut corriger la courbe caractéristique flux massique/couple de rotation général (ṁ/M_{G}) au moyen d'une seule valeur déterminée, calculée ou corrigée pour le couple de rotation à vide.

14. Epandeur centrifuge selon l'une quelconque des revendications 1 à 13, **caractérisé en ce que** l'on peut corriger la courbe caractéristique flux massique/couple de rotation général (ṁ/M_{G}) par translation parallèle ou extension.

15. Epandeur centrifuge selon l'une quelconque des revendications 1 à 14, **caractérisé en ce que** les moyens de réglage présentent les caractéristiques suivantes prises individuellement ou en combinaison :
. godets d'éjection pouvant être ajustés angulairement dans le plan du disque de distribution,
. parties de godets d'éjection réglables dans un plan perpendiculaire au disque de distribution,
. godets d'éjection à arête d'éjection à position modifiable,
. godets d'éjection échangeables de longueur et/ou de forme différente,
. disques de distribution échangeables à diamètres différents et/ou à godets d'éjection dont la position de l'arête d'éjection est différente,
. point d'alimentation en engrais sur le disque distributeur réglable,
. entraînement à vitesse de rotation variable pour le disque distributeur.

16. Epandeur centrifuge selon l'une quelconque des revendications 1 à 14, **caractérisé en ce que** :
. l'on mémorise et l'on peut extraire de le microcalculateur, pour différents types de produits à épandre où pour des groupes de types de produits à épandre à aptitude d'écoulement sensiblement identique, une correspondante ou une seule courbe caractéristique organe de dosage/flux massique pour la dépendance du flux massique du réglage de l'organe de dosage,
. l'organe de dosage est réglable selon cette courbe caractéristique en fonction du flux massique de consigne,
. le microcalculateur présente une unité de calcul,
. faisant la moyenne des faibles variations dans la grandeur de sortie du détecteur de couple de rotation et le cas échéant du détecteur de vitesse de rotation pour arriver à une valeur moyenne représentant le flux massique réel,
. faisant la moyenne de faibles variations dans le réglage de l'organe de dosage pour arriver à une valeur moyenne représentant le réglage réel de l'organe de dosage,
. comparant ces deux valeurs aux valeurs correspondantes de la courbe caractéristique organe de dosage/flux massique et
. corrigeant, au moyen de la divergence entre ces deux valeurs et les valeurs de la courbe caractéristique mémorisée, la courbe caractéristique organe de dosage/flux massique mémorisée et la mettant en mémoire.

17. Epandeur centrifuge selon la revendication 16, **caractérisé en ce que** le microcalculateur comporte un programme pour masquer les variations importantes dans la grandeur de sortie du détecteur de couple de rotation, le cas échéant du détecteur de vitesse de rotation, et dans le réglage de l'organe de dosage.

18. Epandeur centrifuge selon l'une quelconque des revendications 1 à 17, **caractérisé en ce que** l'on peut sélectionner et visualiser les courbes caractéristiques flux massique/couplé de rotation totale correspondant aux moyens de réglage et/ou au réglage des moyens de réglage.

19. Epandeur centrifuge selon l'une quelconque des revendications 1 à 18, **caractérisé en ce que** l'on peut afficher sur un écran les courbes caractéristiques flux massique/couple de rotation totale ou leurs valeurs représentatives.

20. Epandeur centrifuge selon l'une quelconque des revendications 1 à 19, **caractérisé en ce que** dans le cas d'un épandeur à deux disques, l'on prévoit pour chaque disque distributeur un détecteur enregistrant le couple de rotation et le cas échéant le régime de vitesses de rotation de l'entraînement rotatif et **en ce que** les organes de dosage pour les deux disques distributeurs peuvent être commandés par le dispositif de réglage indépendamment l'un de l'autre.

21. Epandeur centrifuge selon l'une quelconque des revendications 1 à 19, **caractérisé en ce que** dans le cas d'un épandeur à deux disques, l'on ne prévoit pour les deux disques distributeurs un seul détecteur enregistrant le couple de rotation et le cas échéant le régime de vitesses de rotation d'un entraînement rotatif et **en ce que** les organes de dosage pour les deux disques distributeurs peuvent être commandés conjointement par le dispositif de réglage.

22. Epandeur centrifuge selon l'une quelconque des revendications 1 à 19, **caractérisé en ce que** dans le cas d'un épandeur à deux disque à entraînement central l'on prévoit pour les deux disques distributeurs un détecteur enregistrant le couple de rotation et le cas échéant le régime de vitesses de rotation de l'entraînement central et **en ce que** les organes de dosage des deux disques distributeurs peuvent être commandés par le dispositif de réglage.

23. Epandeur centrifuge selon l'une quelconque des revendications 1 à 22, **caractérisé en ce que** l'on mémorise dans le microcalculateur pour chacun des deux disques distributeurs un réseau de courbes caractéristiques flux massique/couple de rotation général (ṁ/M_{G}) pour différents modes de distribution.

24. Epandeur centrifuge selon l'une quelconque des revendications 1 à 22, **caractérisé en ce que** dans le cas d'un épandeur à deux disques à deux moyens de réglage différents ou un réglage différent de ceux-ci l'on mémorise les courbes caractéristiques flux massique/couple de rotation général (ṁ/M_{G}) qui leur sont propres.

25. Epandeur centrifuge selon l'une quelconque des revendications 20 à 24, **caractérisé en ce qu'**en cas d'interruption du flux massique pour un disque distributeur seulement on peut déterminer le couple de rotation à vide effectif de ce disque et **en ce que** l'on peut corriger par ajustement avec le couple de rotation à vide enregistré avant le début de l'opération d'épandage ou une interruption de flux massique antérieure les courbes caractéristiques flux massique/couple de rotation général (ṁ/M_{G}) pour les moyens de réglage de ces disques distributeurs et **en ce que** l'on peut mémoriser la courbe caractéristique corrigée.

26. Epandeur centrifuge selon l'une quelconque des revendications 1 à 25, **caractérisé en ce que** l'on peut enregistrer la position réelle de l'organe de dosage ou d'un entraînement commandant celui-ci pour chaque disque distributeur pour une quantité d'épandage de consigne identique et **en ce que** pour une grandeur identique de sortie du détecteur de couple de rotation on peut signaler une divergence trop importante entre les deux positions.

27. Epandeur centrifuge selon l'une quelconque des revendications 1 à 26, **caractérisé en ce que** l'on peut signaler comme message d'erreur une différence soudaine importante des grandeurs de sortie des détecteurs de couple de rotation ou du détecteur de couple de rotation d'une seul disque distributeur par rapport à celles du détecteur de couple de rotation de l'autre disque distributeur.

28. Epandeur centrifuge selon l'une quelconque des revendications 1 à 27, **caractérisé en ce que** l'on peut signaler un avertissement "réservoir vide" lorsque la grandeur de sortie du détecteur de couple de rotation descend au niveau de la grandeur de sortie en cas à vide.

29. Epandeur centrifuge selon l'une quelconque des revendications 1 à 28, **caractérisé en ce que** le réservoir est enregistré par un système de pesée, **en ce que** l'on peut mémoriser dans le microcalculateur, comme quantité de départ, la quantité de produit à épandre présente dans le réservoir au début de l'épandage, **en ce que** l'on peut mémoriser la quantité de produit épandue au moyen du flux massique réel totalisé et **en ce que** l'on peut déterminer la différence entre les deux valeurs comme quantité restante théorique, et **en ce que** la quantité restante effective peut être enregistrée par le système de pesage et comparée à la quantité restante théorique, et **en ce que** dans le cas de divergences intolérables on peut corriger, au moyen de la divergence, la courbe caractéristique flux massique/couple de rotation et/ou la courbe caractéristique flux massique/couple de rotation général et/ou la courbe caractéristique organe de dosage/flux massique.

30. Epandeur centrifuge selon l'une quelconque des revendications 1 à 29, **caractérisé en ce qu'**en cas de rajout de produit d'épandage durant l'opération d'épandage on peut mémoriser à chaque fois la quantité ajoutée (quantité totale pesée moins quantité restante pesée) et **en ce que** la valeur résultant de la somme de la quantité de départ et de la quantité rajoutée d'une part, et de la quantité restante effective disponible à la fin de l'opération d'épandage peut être mémorisée et/ou affichée comme quantité d'épandage totale.

31. Epandeur centrifuge selon l'une quelconque des revendications 1 à 30, **caractérisé en ce que** dans le cas d'un entraînement hydraulique des disques distributeurs, des détecteurs enregistrent la chute de pression au-dessus du moteur hydraulique et la mémorisent dans le microcalculateur comme grandeur de sortie pour le couple de rotation.

32. Epandeur centrifuge selon l'une quelconque des revendications 1 à 30, **caractérisé en ce que** dans le cas d'un entraînement hydraulique des disques distributeurs, l'ensemble moteur hydraulique et disque distributeur est relié à l'épandeur par un élément composant résistant au couple du moteur hydraulique, et **en ce qu'**au moins une jauge extensométrique est montée sur l'élément composant comme détecteur de couple de rotation.

33. Epandeur centrifuge selon la revendication 32, **caractérisé en ce que** l'élément constructif est conformé en bras et **en ce qu'**à chaque fois une jauge extensométrique est montée sur des faces en regard du bras.

34. Epandeur centrifuge selon l'une quelconque des revendications 1 à 30, **caractérisé en ce que** dans le cas d'un entraînement électrique du disque distributeur, le détecteur mesure la consommation de courant du moteur hydraulique et le transmet au microcalculateur comme grandeur de sortie pour le couple de rotation.

35. Epandeur centrifuge selon l'une quelconque des revendications 1 à 30, **caractérisé en ce que** dans le cas d'un entraînement mécanique du disque distributeur par l'intermédiaire d'un train d'engrenages, au moins un détecteur est monté sur une pièce du train d'engrenages soumise au couple de rotation qui transmet un signal électrique au microcalculateur comme grandeur de sortie.

36. Epandeur centrifuge selon la revendication 35, **caractérisé en ce que** le détecteur est une jauge extensométrique.

37. Epandeur centrifuge selon la revendication 36 ou 36, **caractérisé en ce que** le détecteur tourne avec la pièce sur laquelle il est monté et **en ce que** le signal électrique transmis peut être prélevé au moyen de curseurs contacts de frottement.

38. Epandeur centrifuge selon la revendication 35, **caractérisé en ce que** sur la pièce tournante du train d'engrenages soumis au couple de rotation, au moins deux émetteurs incrémentaux sont disposée à distance axiale l'un de l'autre et **en ce qu'**à chacun d'eux est associé un détecteur d'impulsions, et **en ce que** le décalage de phases des impulsions enregistrées par les deux enregistreurs, pour le flux massique ṁ=0, est consigné comme valeur de référence, et le décalage de phases, pour un flux massique ṁ>0, est consigné comme valeur de mesure pour le couple de rotation instantané.

39. Epandeur centrifuge selon la revendication 38, dans lequel le train d'engrenages présente au moins un arbre transversal s'étendant transversalement par rapport au sens de la marche relié à l'arbre de transmission du tracteur par des renvois d'angle, **caractérisé en ce que** les deux émetteurs incrémentaux sont montés sur au moins une partie de l'arbre transversal entraînant l'un des disques distributeurs.

40. Epandeur centrifuge selon la revendication 38 ou 39, **caractérisé en ce que** les enregistreurs d'impulsions sont montés sur la face extérieure d'un carter logeant le train d'engrenages.

41. Epandeur centrifuge selon l'une quelconque des revendications 1 à 38, **caractérisé en ce qu'**un couple accélérateur ou décélérateur enregistré lors d'un changement de vitesse de rotation par le détecteur de couple de rotation est extrait de le microcalculateur au moyen d'un programme et n'apporte aucune contribution à la grandeur de réglage pour l'organe de dosage.
